(19) Europäisches Patentamt
European Patent Office
Office européen des brevets

(11) **EP 4 656 382 A1**

(12) **EUROPEAN PATENT APPLICATION**
published in accordance with Art. 153(4) EPC

(43) Date of publication:
03.12.2025 Bulletin 2025/49

(21) Application number: 24747310.1

(22) Date of filing: 23.01.2024

(51) International Patent Classification (IPC):
*B32B 27/30* (2006.01)     *B32B 27/26* (2006.01)
*B32B 27/32* (2006.01)     *B32B 27/36* (2006.01)
*B32B 27/40* (2006.01)

(52) Cooperative Patent Classification (CPC):
B32B 27/26; B32B 27/30; B32B 27/32;
B32B 27/36; B32B 27/40

(86) International application number:
PCT/JP2024/001891

(87) International publication number:
WO 2024/157983 (02.08.2024 Gazette 2024/31)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 27.01.2023 JP 2023011296
27.01.2023 JP 2023011297

(71) Applicant: Mitsui Chemicals, Inc.
Tokyo 104-0028 (JP)

(72) Inventors:
• SUGIHARA, Tomoki
Tokyo 104-0028 (JP)
• KOUDA, Chikako
Sodegaura-shi, Chiba 299-0265 (JP)
• NAKAGAWA, Toshihiko
Sodegaura-shi, Chiba 299-0265 (JP)
• FUKUDA, Kazuyuki
Sodegaura-shi, Chiba 299-0265 (JP)

(74) Representative: Hoffmann Eitle
Patent- und Rechtsanwälte PartmbB
Arabellastraße 30
81925 München (DE)

(54) **LAMINATE**

(57) A laminate 1 includes a polyolefin substrate 2, a polyurethane layer 3 disposed on the polyolefin substrate 2, and an inorganic vapor deposition layer 4 disposed on the polyurethane layer 3. A thermal expansion coefficient of the polyurethane layer 3, which is measured in a temperature range of 90°C to 120°C, is $150 \times 10^{-5} K^{-1}$ or less.

FIG. 1

1

EP 4 656 382 A1

**Description**

TECHNICAL FIELD

The present invention relates to a laminate.

BACKGROUND ART

Conventionally, a laminate (composite film) having gas barrier properties has been known. Such a laminate includes, for example, a substrate, an anchor coat layer disposed on the one-side surface of the substrate, and an inorganic vapor deposition layer disposed on the one-side surface of the anchor coat layer.
As the anchor coat layer of the laminate, for example, a polyurethane layer has been known. The polyurethane layer is formed, for example, by applying a polyurethane dispersion to a substrate and drying it.
As the polyurethane dispersion, for example, the following polyurethane dispersion has been known. The polyurethane dispersion is an aqueous dispersion of a polyurethane resin. The polyurethane resin is a reaction product of an isocyanate group-terminated prepolymer and a chain extender. The isocyanate group-terminated prepolymer includes a reaction product of a polyisocyanate component containing a xylylene diisocyanate, and an active hydrogen group-containing component containing a short-chain diol having 2 to 6 carbon atoms and an active hydrogen group-containing compound containing a hydrophilic group. The chain extender includes an ethylenediamine. The ratio of the ethylenediamine with respect to the total amount of the chain extender is 25 mol% or more. The polyurethane dispersion is also applied to a substrate and dried to form a gas barrier coating material. Further, aluminum is vapor-deposited on the gas barrier coating material to form an inorganic vapor deposition layer. In this manner, a laminate is produced (see, for example, Patent Document 1 (Example 15)).

Citation List

Patent Document

Patent Document 1: International Publication No. WO2022/158445

SUMMARY OF THE INVENTION

PROBLEM TO BE SOLVED BY THE INVENTION

Meanwhile, in the above-described laminate, the substrate contains a polyolefin resin. In such a case, the adhesiveness between the substrate and the gas barrier coating material may not be sufficient. The laminate is required to have excellent adhesiveness. In particular, the laminate is required to maintain excellent adhesiveness even after a damp heat (retort) test.
In addition, when the substrate contains a polyolefin resin, the substrate may thermally expand in a damp heat (retort) environment. In such a case, the gas barrier coating material and the inorganic vapor deposition layer may conform with the expansion of the substrate, and the inorganic vapor deposition layer may be damaged. Therefore, the above-described laminate is required to have improved damp heat resistance (retort resistance).
The present invention is a laminate having excellent adhesiveness and damp heat resistance.

MEANS FOR SOLVING THE PROBLEM

The present invention [1] includes a laminate comprising: a polyolefin substrate; a polyurethane layer disposed on the polyolefin substrate; and an inorganic vapor deposition layer disposed on the polyurethane layer, wherein a thermal expansion coefficient of the polyurethane layer is $150 \times 10^{-5}K^{-1}$ or less, the thermal expansion coefficient being measured in a temperature range of 90°C to 120°C.
The present invention [2] includes the laminate described in the above-described [1], wherein the polyurethane layer includes a dried product of a polyurethane dispersion, and wherein the polyurethane dispersion contains a polyurethane resin.
The present invention [3] includes the laminate described in the above-described [2], wherein the polyurethane resin contains an ester group, and wherein a molar amount (mmol) of the ester group is 0.5 mmol/g or more and 6.0 mmol/g or less with respect to a mass (g) of the polyurethane resin.
The present invention [4] includes the laminate described in the above-described [3], wherein the polyurethane resin contains an aromatic ring, and wherein a content ratio of the aromatic ring is 0.01% by mass or more and 30% by mass or less with respect to a total amount of the polyurethane resin.

The present invention [5] includes the laminate described in any one of the above-described [2] to [4], wherein the polyurethane resin contains a reaction product of an isocyanate group-terminated prepolymer and a chain extender, and wherein the isocyanate group-terminated prepolymer contains: a reaction product of a polyisocyanate component, a high molecular weight polyol containing a polyester polyol, a low molecular weight polyol, and a carboxyl group-containing polyol.

The present invention [6] includes the laminate described in any one of the above-described [2] to [5], wherein the polyurethane dispersion contains a cross-linking agent, and wherein the cross-linking agent includes at least one type selected from the group consisting of an epoxy cross-linking agent, a carbodiimide cross-linking agent, and an isocyanate cross-linking agent.

The present invention [7] includes the laminate described in any one of the above-described [2] to [6], wherein a raw material of the polyurethane resin contains a silane coupling agent, and wherein a content ratio of the silane coupling agent is 0.01% by mass or more and 20% by mass or less with respect to a total amount of the raw material of the polyurethane resin.

The present invention [8] includes the laminate described in the above-described [5], wherein the chain extender contains a silane coupling agent containing an amino group, and/or wherein the polyurethane dispersion contains a cross-linking agent, the cross-linking agent contains an epoxy cross-linking agent, and the epoxy cross-linking agent contains a silane coupling agent containing an epoxy group.

EFFECTS OF THE INVENTION

In the laminate of the present invention, the polyurethane layer is disposed on the polyolefin substrate. Furthermore, the inorganic vapor deposition layer is disposed on the polyurethane layer. The polyurethane layer includes a dried product of a polyurethane dispersion. The polyurethane dispersion contains a polyurethane resin. The polyurethane resin includes a reaction product of an isocyanate group-terminated prepolymer and a chain extender. The thermal expansion coefficient of the polyurethane layer, which is measured in the temperature range of 90°C to 120°C, is a predetermined value or less. Therefore, the polyurethane layer has excellent adhesiveness and damp heat resistance. Furthermore, when the above-described polyurethane layer is disposed on the polyolefin substrate, the thermal expansion of the polyolefin substrate is suppressed by the polyurethane layer. Therefore, damage to the inorganic vapor deposition layer is suppressed.

Therefore, the above-described laminate has excellent adhesiveness and damp heat resistance.

BRIEF DESCRIPTION OF THE DRAWINGS

FIG. 1 is a schematic configuration diagram showing one embodiment of the laminate of the present invention.
FIG. 2 is a schematic configuration diagram of a laminate film including the laminate of FIG. 1.

DESCRIPTION OF THE EMBODIMENTS

1. Laminate

(1) Entire Structure

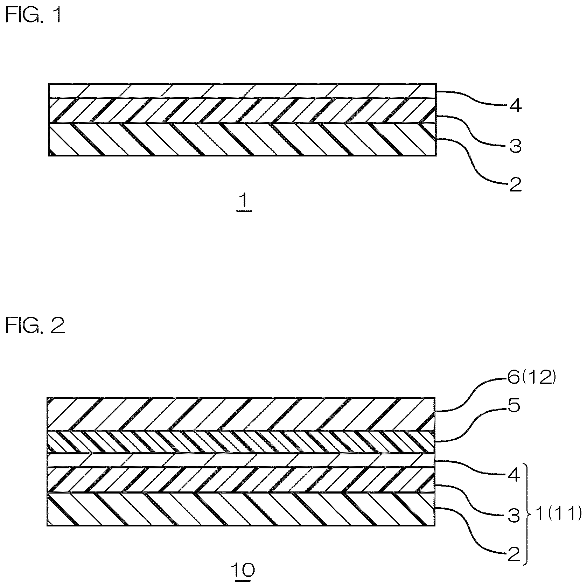

In FIG. 1, a laminate 1 is a composite film including a plurality of layers. The laminate 1 includes a polyolefin substrate 2 (substrate layer), a polyurethane layer 3 disposed on the polyolefin substrate 2, and an inorganic vapor deposition layer 4 disposed on the polyurethane layer 3. In other words, in FIG. 1, the polyolefin substrate 2, the polyurethane layer 3, and the inorganic vapor deposition layer 4 are sequentially laminated along a thickness direction of the laminate 1.

(2) Polyolefin Substrate

The polyolefin substrate 2 is a substrate containing a polyolefin resin. Preferably, the polyolefin substrate 2 is a substrate consisting of a polyolefin resin. The substrate consisting of a polyolefin resin can facilitate making a laminate film 10 described below (see FIG. 2) from a mono material (unification of the materials), and can improve the recyclability.

Examples of the polyolefin resin include polyethylene, polypropylene, and an ethylenepropylene copolymer (random/block). These may be used alone or in combination of two or more. As the polyolefin resin, preferably polypropylene is used. In other words, as the polyolefin substrate 2, preferably a polypropylene substrate is used. More specifically, as the polyolefin substrate 2, preferably a polyolefin film is used, and more preferably a polypropylene film is used. Examples of the substrate include a film, a sheet, a bottle, and a cup, and preferably a film is used. Examples of the substrate include a cast substrate, an uniaxially oriented substrate, and a biaxially oriented substrate, and preferably a biaxially oriented substrate is used.

The polyolefin substrate 2 may be a single layer or a plurality of layers. The polyolefin substrate 2 may be subjected to a surface treatment. Examples of the surface treatment include a corona discharge treatment. Examples of the shape of the polyolefin substrate 2 include a sheet shape, a bottle shape, and a cup shape.

The polyolefin substrate 2 has a thickness of, for example, 3 $\mu$m or more, preferably 5 $\mu$m or more. The thickness of the polyolefin substrate 2 is, for example, 500 $\mu$m or less, preferably 200 $\mu$m or less.

(3) Polyurethane Layer

The polyurethane layer 3 is a resin layer containing a polyurethane resin. In FIG. 1, the polyurethane layer 3 is disposed between the polyolefin substrate 2 and the inorganic vapor deposition layer 4 so as to be in contact with the polyolefin substrate 2. That is, in FIG. 1, the polyurethane layer 3 is an anchor coat layer.

The polyurethane layer 3 includes a dried product of a polyurethane dispersion. More specifically, the polyurethane layer 3 is obtainable by applying an anchor coating agent (described later) containing a polyurethane dispersion to a one-side surface of the polyolefin substrate 2 and drying it.

The polyurethane dispersion contains a polyurethane resin. More specifically, the polyurethane dispersion is an aqueous dispersion of a polyurethane resin. Examples of the polyurethane resin include a polyurethane resin having gas barrier properties. The gas barrier properties are properties of lowering oxygen permeability.

More specifically, the polyurethane resin includes a reaction product of an isocyanate group-terminated prepolymer and a chain extender. The isocyanate group-terminated prepolymer is obtainable by the reaction of a polyisocyanate component with an active hydrogen group-containing component.

That is, the isocyanate group-terminated prepolymer is a primary reaction product of the polyisocyanate component and the active hydrogen group-containing component, and the polyurethane resin is a secondary reaction product of the isocyanate group-terminated prepolymer and the chain extender.

The polyurethane resin and the polyurethane dispersion can be obtained, for example, by the following method.

In the method, first, an isocyanate group-terminated prepolymer is synthesized. The isocyanate group-terminated prepolymer is a polyurethane prepolymer having two or more free isocyanate groups at its molecular terminal. The isocyanate group-terminated prepolymer is obtainable by the reaction of a polyisocyanate component with an active hydrogen group-containing component, as described above.

Examples of the polyisocyanate component include an aromatic polyisocyanate, an araliphatic polyisocyanate, and an aliphatic polyisocyanate.

Examples of the aromatic polyisocyanate include an aromatic polyisocyanate monomer and an aromatic polyisocyanate derivative. Examples of the aromatic polyisocyanate monomer include aromatic diisocyanate. Examples of the aromatic diisocyanate include tolylene diisocyanate (TDI), naphthalene diisocyanate (NDI), and diphenylmethane diisocyanate (MDI). Examples of the aromatic polyisocyanate derivative include a modified product obtained by modifying an aromatic polyisocyanate monomer by a known method. More specifically, examples of the modified product include a multimer, an allophanate-modified product, a polyol-modified product, a biuret-modified product, a urea-modified product, an oxadiazinetrione-modified product, and a carbodiimide-modified product. These may be used alone or in combination of two or more.

Examples of the araliphatic polyisocyanate include an araliphatic polyisocyanate monomer and an araliphatic polyisocyanate derivative. Examples of the araliphatic polyisocyanate monomer include an araliphatic diisocyanate. Examples of the araliphatic diisocyanate include xylylene diisocyanate (XDI) and tetramethylxylylene diisocyanate (TMXDI). Examples of the araliphatic polyisocyanate derivative include the above-described modified products of the araliphatic polyisocyanate monomer. These may be used alone or in combination of two or more.

Examples of the aliphatic polyisocyanate include a chain aliphatic polyisocyanate and an alicyclic polyisocyanate.

Examples of the chain aliphatic polyisocyanate include a chain aliphatic polyisocyanate monomer and a chain aliphatic polyisocyanate derivative. Examples of the chain aliphatic polyisocyanate monomer include a chain aliphatic diisocyanate. Examples of the chain aliphatic diisocyanate include ethylene diisocyanate, butylene diisocyanate, 1,5-pentamethylene diisocyanate (PDI), and 1,6-hexamethylene diisocyanate (HDI). Examples of the chain aliphatic polyisocyanate derivative include the above-described modified products of the chain aliphatic polyisocyanate monomer. These may be used alone or in combination of two or more.

Examples of the alicyclic polyisocyanate include an alicyclic polyisocyanate monomer and an alicyclic polyisocyanate derivative. Examples of the alicyclic polyisocyanate monomer include alicyclic diisocyanate. Examples of the alicyclic diisocyanate include bis(isocyanatomethyl)cyclohexane ($H_6$XDI), methylene bis(cyclohexyl isocyanate) ($H_{12}$MDI), isophoronediisocyanate (IPDI), and norbornane diisocyanate (NBDI). Examples of the alicyclic polyisocyanate derivative include the above-described modified products of an alicyclic polyisocyanate monomer. These may be used alone or in combination of two or more.

These polyisocyanate components may be used alone or in combination of two or more. From the viewpoint of gas barrier properties, as the polyisocyanate component, preferably an aromatic polyisocyanate and an alicyclic polyisocyanate are used. That is, the polyisocyanate component preferably contains an aromatic polyisocyanate and/or an alicyclic polyisocyanate. From the viewpoint of gas barrier properties, as the polyisocyanate component, more preferably an alicyclic polyisocyanate is used, even more preferably an alicyclic diisocyanate is used, and particularly preferably a methylene bis(cyclohexyl isocyanate) is used.

The active hydrogen group-containing component contains a plurality of active hydrogen groups in one molecule. Examples of the active hydrogen group include a hydroxyl group and an amino group. More specifically, examples of the active hydrogen group-containing component include a polyol and a polyamine, and preferably a polyol is used.

Examples of the polyol include a high molecular weight polyol, a low molecular weight polyol, and an ionic group-containing polyol.

The high molecular weight polyol is an organic compound having two or more hydroxyl groups in the molecule and having no ionic group described later, and having a relatively high molecular weight. The relatively high molecular weight means that the number-average molecular weight (Mn) is 650 or more, preferably 700 or more.

Examples of the high molecular weight polyol include a polyester polyol. Examples of the polyester polyol include a condensed polyester polyol and a ring-opening polyester polyol. As the polyester polyol, preferably a condensed polyester polyol is used.

The condensed polyester polyol is obtained by a condensation reaction (esterification reaction) of a polyvalent carboxylic acid and a polyhydric alcohol.

Examples of the polyvalent carboxylic acid include a polyvalent carboxylic acid containing an aromatic ring (hereinafter referred to as an aromatic ring-containing polyvalent carboxylic acid) and a polyvalent carboxylic acid not containing an aromatic ring (hereinafter referred to as an aromatic ring-free polyvalent carboxylic acid). Examples of the aromatic ring-containing polyvalent carboxylic acid include phthalic acid, terephthalic acid, isophthalic acid, naphthalene dicarboxylic acid, trimellitic acid, anhydrides thereof, dialkyl esters thereof, and acid halides thereof. Examples of the aromatic ring-free polyvalent carboxylic acid include adipic acid, sebacic acid, azelaic acid, anhydrides thereof, dialkyl esters thereof, and acid halides thereof. These may be used alone or in combination of two or more.

Examples of the polyhydric alcohol include a polyhydric alcohol containing an aromatic ring (hereinafter referred to as an aromatic ring-containing polyhydric alcohol) and a polyhydric alcohol not containing an aromatic ring (hereinafter referred to as an aromatic ring-free polyhydric alcohol). Examples of the aromatic ring-containing polyhydric alcohol include dihydroxydiphenyl, dihydroxytriphenyl, dihydroxybenzophenone, and hydroquinone. Examples of the aromatic ring-free polyhydric alcohol include an alkanediol having 2 to 6 carbon atoms described later, an ether diol having 2 to 6 carbon atoms described later, and an alkene diol having 2 to 6 carbon atoms described later. These may be used alone or in combination of two or more.

The polyvalent carboxylic acid and the polyhydric alcohol are dehydrated and condensed by a known method to form a condensed polyester polyol. The blending ratio of the polyvalent carboxylic acid and the polyhydric alcohol and the reaction conditions thereof are not particularly limited and are appropriately set. As the condensed polyester polyol, preferably a condensed polyester polyol containing an aromatic ring (hereinafter, an aromatic ring-containing polyester polyol) is used. The aromatic ring-containing polyester polyol is obtainable, for example, by the above-described condensation reaction when the polyvalent carboxylic acid contains an aromatic ring-containing carboxylic acid and/or the polyhydric alcohol contains an aromatic ring-containing polyhydric alcohol.

When an aromatic ring-containing polyester polyol is used, as described later, the aromatic ring is contained in the polyurethane resin and the polyurethane layer 3. Therefore, excellent adhesiveness and damp heat resistance can be achieved.

The high molecular weight polyol can include other high molecular weight polyols. Other high molecular weight polyols are high molecular weight polyols except for polyester polyols.

Examples of other high molecular weight polyols include a polyether polyol, a polycarbonate polyol, a polyurethane polyol, an epoxy polyol, a vegetable oil polyol, a polyolefin polyol, an acrylic polyol, and a vinyl monomer modified polyol. As other high molecular weight polyols, preferably a polyether polyol and a polycarbonate polyol are used. Examples of the polyether polyol include a polyoxyalkylene polyol. Examples of the polyoxyalkylene polyol include a polyoxyalkylene (C2-3) polyol and a polytetramethylene ether polyol. Examples of the polycarbonate polyol include a ring-opening polymer of ethylene carbonate using a low molecular weight polyol (described later) as an initiator. These may be used alone or in combination of two or more.

The high molecular weight polyol preferably does not contain other high molecular weight polyols and consists of a polyester polyol, more preferably consists of a condensed polyester polyol, and even more preferably consists of an aromatic ring-containing polyester polyol.

The average number of hydroxyl groups (average number of functional groups) of the high molecular weight polyol is, for example, 2 or more. The average number of hydroxyl groups (average number of functional groups) of the high molecular weight polyol is, for example, 6 or less, preferably 4 or less, more preferably 3 or less, and even more preferably 2.5 or less. The average number of hydroxyl groups (average number of functional groups) of the high molecular weight polyol is most preferably 2. The average number of hydroxyl groups (average number of functional groups) can be calculated from the charge of the raw materials of the high molecular weight polyol.

The number average molecular weight of the high molecular weight polyol is 650 or more, preferably 700 or more, more preferably 800 or more, even more preferably 1000 or more, and particularly preferably 1500 or more. The number average molecular weight of the high molecular weight polyol is, for example, 5000 or less, preferably 4000 or less, more preferably 3000 or less, and even more preferably 2500 or less.

The content of the high molecular weight polyol in the active hydrogen group-containing component is adjusted so that the thermal expansion coefficient of the polyurethane layer 3 falls within the range described later. Furthermore, preferably, the content of the high molecular weight polyol in the active hydrogen group-containing component is adjusted so that the content ratio of the ester group of the polyurethane resin falls within the range described later. Furthermore, preferably, the content of the high molecular weight polyol in the active hydrogen group-containing component is adjusted so that the content ratio of the aromatic ring of the polyurethane resin falls within the range described later. Furthermore, preferably, the content of the high molecular weight polyol in the active hydrogen group-containing component is adjusted so that the content ratio of a silane coupling agent with respect to the raw material (described later) of the polyurethane resin falls within the range described later.

More specifically, the content of the high molecular weight polyol is, for example, 30 parts by mass or more, preferably 50 parts by mass or more, and more preferably 70 parts by mass or more with respect to 100 parts by mass of the total amount of the active hydrogen group-containing component. The content of the high molecular weight polyol is, for example, 95 parts by mass or less, preferably 90 parts by mass or less, and more preferably 88 parts by mass or less with respect to 100 parts by mass of the total amount of the active hydrogen group-containing component.

The low molecular weight polyol is an organic compound having two or more hydroxyl groups in the molecule and having no ionic group described later and having a relatively high molecular weight. The relatively low molecular weight means that the number-average molecular weight (Mn) is less than 650, preferably 600 or less, more preferably 500 or less, and even more preferably 400 or less.

That is, the molecular weight of the low molecular weight polyol is less than 650, preferably 600 or less, more preferably 500 or less, and even more preferably 400 or less. Furthermore, the molecular weight of the low molecular weight polyol is, for example, 50 or more. When the low molecular weight polyol has a molecular weight distribution, the molecular weight represents a number-average molecular weight in terms of polystyrene measured by GPC.

Examples of the low molecular weight polyol include a short chain diol having 2 to 6 carbon atoms, and other low molecular weight polyols.

The short chain diol having 2 to 6 carbon atoms is an organic compound having two hydroxyl groups and 2 to 6 carbon atoms. Examples of the short chain diol having 2 to 6 carbon atoms include an alkanediol having 2 to 6 carbon atoms, an ether diol having 2 to 6 carbon atoms, and an alkene diol having 2 to 6 carbon atoms.

Examples of the alkanediol having 2 to 6 carbon atoms include ethylene glycol, propylene glycol, 1,3-propanediol, 1,4-butylene glycol, 1,3-butylene glycol, 1,2-butylene glycol, 1,5-pentanediol, 1,6-hexanediol, neopentyl glycol, 3-methyl-1,5-pentanediol, 1,3-cyclohexanediol, and 1,4-cyclohexanediol. Examples of the ether diol having 2 to 6 carbon atoms include diethylene glycol, triethylene glycol, and dipropylene glycol. Examples of the alkenediol having 2 to 6 carbon atoms include 1,4-dihydroxy-2-butene.

The short chain diols having 2 to 6 carbon atoms can be used alone or in combination of two or more. From the viewpoint of gas barrier properties, as the short chain diol having 2 to 6 carbon atoms, preferably an ether diol having 2 to 6 carbon atoms is used, and more preferably a triethylene glycol is used.

The content of the short chain diol having 2 to 6 carbon atoms in the active hydrogen group-containing component is adjusted so that the thermal expansion coefficient of the polyurethane layer 3 falls within the range described later. Furthermore, preferably, the content of the short chain diol having 2 to 6 carbon atoms in the active hydrogen group-containing component is adjusted so that the content ratio of the ester group of the polyurethane resin falls within the range described later. Furthermore, preferably, the content of the short chain diol having 2 to 6 carbon atoms in the active hydrogen group-containing component is adjusted so that the content ratio of the aromatic ring of the polyurethane resin falls within the range described later. Furthermore, preferably, the content of the short chain diol having 2 to 6 carbon atoms in the active hydrogen group-containing component is adjusted so that the content ratio of the silane coupling agent with respect to the raw material (described later) of the polyurethane resin falls within the range described later.

The content of the short chain diol having 2 to 6 carbon atoms is, for example, 0.1 parts by mass or more, preferably 0.5 parts by mass or more, and more preferably 1.0 parts by mass or more with respect to 100 parts by mass of the total amount of the active hydrogen group-containing component. The content of the short chain diol having 2 to 6 carbon atoms is, for example, 60 parts by mass or less, preferably 30 parts by mass or less, and more preferably 10 parts by mass or less with respect to 100 parts by mass of the total amount of the active hydrogen group-containing component.

Other low molecular weight polyols are low molecular weight polyols except for short chain diols having 2 to 6 carbon atoms. Examples of other low molecular weight polyols include diols having 7 or more carbon atoms and trivalent or more low molecular weight polyols.

Examples of the diol having 7 or more carbon atoms include alkane (7 to 20 carbon atoms)-1,2-diol, 2,6-dimethyl-1-octene-3,8-diol, 1,3-cyclohexanedimethanol, 1,4-cyclohexanedimethanol, hydrogenated bisphenol A, and bisphenol A. These may be used alone or in combination of two or more.

Examples of the trivalent or more low molecular weight polyol include a trihydric alcohol and a tetrahydric alcohol. Examples of the trihydric alcohol include glycerin, 2-methyl-2-hydroxymethyl-1,3-propanediol, 2,4-dihydroxy-3-hydroxymethylpentane, 1,2,6-hexanetriol, trimethylolpropane, and 2,2-bis(hydroxymethyl)-3-butanol. Examples of the tetrahydric alcohol include pentaerythritol and diglycerine. These may be used alone or in combination of two or more.

Other low molecular weight polyols may be used alone or in combination of two or more. As other low molecular weight polyols, from the viewpoint of water resistance and water dispersion stability, preferably a trivalent or more low molecular weight polyol is used, and more preferably a trihydric alcohol is used, and particularly preferably trimethylolpropane is used.

The content of other low molecular weight polyols in the active hydrogen group-containing component is adjusted so that the thermal expansion coefficient of the polyurethane layer 3 falls within the range described later. Furthermore, preferably, the content of other low molecular weight polyols in the active hydrogen group-containing component is adjusted so that the content ratio of the ester group of the polyurethane resin falls within the range described later. Furthermore, preferably, the content of other low molecular weight polyols in the active hydrogen group-containing component is adjusted so that the content ratio of the aromatic ring of the polyurethane resin falls within the range described later. Furthermore, preferably, the content of other low molecular weight polyols in the active hydrogen group-containing component is adjusted so that the content ratio of the silane coupling agent with respect to the raw material (described later) of the polyurethane resin falls within the range described later.

The content of other low molecular weight polyols is, for example, 30 parts by mass or less, preferably 20 parts by mass or less, more preferably 10 parts by mass or less, particularly preferably 0 parts by mass with respect to 100 parts by mass of the total amount of the active hydrogen group-containing component.

That is, the low molecular weight polyol preferably contains only a short chain diol having 2 to 6 carbon atoms, and does not contain other low molecular weight polyols.

The content (total amount) of the low molecular weight polyol in the active hydrogen group-containing component is adjusted so that the thermal expansion coefficient of the polyurethane layer 3 falls within the range described later. Furthermore, preferably, the content (total amount) of the low molecular weight polyol in the active hydrogen group-containing component is adjusted so that the content ratio of the ester group of the polyurethane resin falls within the range described later. Furthermore, preferably, the content (total amount) of the low molecular weight polyol in the active hydrogen group-containing component is adjusted so that the content ratio of the aromatic ring of the polyurethane resin falls within the range described later. Furthermore, preferably, the content (total amount) of the low molecular weight polyol in the active hydrogen group-containing component is adjusted so that the content ratio of the silane coupling agent with respect to the raw material (described later) of the polyurethane resin falls within the range described later.

The content (total amount) of the low molecular weight polyol is, for example, 0.1 parts by mass or more, preferably 0.5 parts by mass or more, and more preferably 1.0 part by mass or more with respect to 100 parts by mass of the total amount of the active hydrogen group-containing component. The content (total amount) of the low molecular weight polyol is, for example, 60 parts by mass or less, preferably 30 parts by mass or less, and more preferably 10 parts by mass or less with respect to 100 parts by mass of the total amount of the active hydrogen group-containing component.

An ionic group-containing polyol is an organic compound having two or more hydroxyl groups in its molecule and one or more ionic groups. Examples of the ionic group include an anionic group and a cationic group, and preferably an anionic group. That is, examples of the ionic group-containing polyol include an anionic group-containing polyol and a cationic group-containing polyol, and preferably an anionic group-containing polyol is used.

Examples of the anionic group in the anionic group-containing polyol include a carboxyl group (carboxylic acid group) and a sulfo group (sulfonic acid group). From the viewpoint of gas barrier properties and water resistance, as the anionic group, preferably a carboxy group is used. That is, as the anionic group-containing polyol, preferably a carboxyl group-containing polyol is used.

Examples of the carboxyl group-containing polyol include polyhydroxyalkanoic acid. Examples of the polyhydroxyalkanoic acid include 2,2-dimethylolacetic acid, 2,2-dimethylollactic acid, 2,2-dimethylolpropionic acid (also known as: dimethylolpropionic acid), 2,2-dimethylolbutanoic acid, 2,2-dimethylolbutyric acid, and 2,2-dimethylolvaleric acid. These may be used alone or in combination of two or more. As the carboxyl group-containing polyol, preferably a polyhydroxyalkanoic acid is used, and more preferably 2,2-dimethylolpropionic acid is used.

The content of the ionic group-containing polyol in the active hydrogen group-containing component is adjusted so that the thermal expansion coefficient of the polyurethane layer 3 falls within the range described later. Furthermore, preferably, the content of the ionic group-containing polyol in the active hydrogen group-containing component is adjusted so that the content ratio of the ester group of the polyurethane resin falls within the range described later. Furthermore, preferably, the content of the ionic group-containing polyol in the active hydrogen group-containing component is adjusted so that the content ratio of the aromatic ring of the polyurethane resin falls within the range described later. Furthermore, preferably, the content of the ionic group-containing polyol in the active hydrogen group-containing component is adjusted so that the content ratio of the silane coupling agent with respect to the raw material (described later) of the polyurethane resin falls within the range described later.

The content of the ionic group-containing polyol is, for example, 1 part by mass or more, preferably 5 parts by mass or more, and more preferably 10 parts by mass or more with respect to 100 parts by mass of the total amount of the active hydrogen group-containing component. The content of the ionic group-containing polyol is, for example, 50 parts by mass or less, preferably 30 parts by mass or less, and more preferably 15 parts by mass or less with respect to 100 parts by mass of the total amount of the active hydrogen group-containing component.

From the viewpoint of achieving all of damp heat resistance, gas barrier properties, and water dispersibility, preferably the active hydrogen group-containing component includes a high molecular weight polyol containing a polyester polyol, a low molecular weight polyol, and an ionic group-containing polyol. From the viewpoint of achieving all of damp heat resistance, gas barrier properties, and water dispersibility, more preferably the active hydrogen group-containing component includes a polyester polyol, a short chain diol having 2 to 6 carbon atoms, and a carboxyl group-containing polyol.

In other words, from the viewpoint of achieving all of damp heat resistance, gas barrier properties, and water dispersibility, preferably the isocyanate group-terminated prepolymer includes a reaction product of a polyisocyanate component, a high molecular weight polyol containing a polyester polyol, a low molecular weight polyol, and a carboxyl group-containing polyol. From the viewpoint of achieving all of damp heat resistance, gas barrier properties, and water dispersibility, the isocyanate group-terminated prepolymer includes a reaction product of an alicyclic polyisocyanate, a polyester polyol, a short chain diol having 2 to 6 carbon atoms, and a carboxyl group-containing polyol.

The isocyanate group-terminated prepolymer is obtainable by reacting the above-described components in a predetermined equivalent ratio. In the synthesis of the isocyanate group-terminated prepolymer, the equivalent ratio is the equivalent ratio (isocyanate group/active hydrogen group) of the isocyanate group with respect to the active hydrogen group (hydroxyl group). The equivalent ratio (isocyanate group/active hydrogen group) is, for example, more than 1, preferably 1.1 or more. The equivalent ratio (isocyanate group/active hydrogen group) is, for example, 20 or less, preferably 10 or less.

In the synthesis of the isocyanate group-terminated prepolymer, a known polymerization method is employed. Examples of the polymerization method include bulk polymerization and solution polymerization. From the viewpoint of adjusting the reactivity, a solution polymerization is preferably employed as the polymerization method. In the bulk polymerization, for example, the above-described components are blended and allowed to react in a nitrogen atmosphere. The reaction temperature is, for example, 75 to 85°C. The reaction time is, for example, 1 to 20 hours. In the solution polymerization, for example, the above-described components are blended and allowed to react in an organic solvent in a nitrogen atmosphere. The reaction temperature is, for example, 20 to 80°C. The reaction time is, for example, 1 to 20 hours. Examples of the organic solvent include a solvent that is inert to isocyanate groups.

In the above-described polymerization, a catalyst may be added as necessary. Examples of the catalyst include an amine-based catalyst and an organometallic catalyst. These catalysts can be used alone or in combination of two or more thereof. The addition amount of the catalyst is appropriately set depending on the purpose and use.

In the method, the above-described polymerization is terminated, for example, when the concentration of the isocyanate group in the reaction product reaches the range described below. In the method, an unreacted polyisocyanate component can be removed by a known removal method. Examples of the removal method include distillation and extraction. In this manner, an isocyanate-terminated prepolymer is obtained.

The isocyanate group concentration of the isocyanate group-terminated prepolymer is, for example, 1% by mass or more, preferably 2% by mass or more, and more preferably 4% by mass or more. The isocyanate group concentration of the isocyanate group-terminated prepolymer is, for example, 25% by mass or less, preferably 20% by mass or less, more preferably 17% by mass or less, and even more preferably 15% by mass or less.

The average number of functional groups of the isocyanate group is, for example, 1.5 or more, preferably 1.9 or more, and more preferably 2.0 or more. The average number of functional groups of the isocyanate group is, for example, 3.0 or less, preferably 2.5 or less.

When the isocyanate group-terminated prepolymer contains an anionic group, for example, a neutralizing agent is added to the isocyanate group-terminated prepolymer to neutralize, thereby forming a salt of the anionic group. Examples of the neutralizing agent include a conventional base. Specifically, examples of the base include an organic base and an inorganic base.

Examples of the organic base include a tertiary amine and a secondary amine. Examples of the tertiary amine include trialkylamine and alkanolamine. Examples of the trialkylamine include trialkylamine having 1 to 4 carbon atoms. Examples of such a trialkylamine include trimethylamine and triethylamine. Examples of the alkanolamine include dimethylethanolamine, methyldiethanolamine, triethanolamine, and triisopropanolamine. Examples of the secondary amine include a heterocyclic amine. Examples of the heterocyclic amine include morpholine. These organic bases may be used alone or in combination of two or more.

Examples of the inorganic base include ammonia, alkali metal hydroxide, alkaline earth metal hydroxide, and alkali metal carbonate. Examples of the alkali metal hydroxide include lithium hydroxide, sodium hydroxide, and potassium hydroxide. Examples of the alkaline earth metal hydroxide include magnesium hydroxide and calcium hydroxide. Examples of the alkali metal carbonate include sodium carbonate and potassium carbonate. These inorganic bases may be used alone or in combination of two or more.

These neutralizing agents may be used alone or in combination of two or more. As the neutralizing agent, preferably an organic base is used, more preferably a tertiary amine is used, even more preferably a trialkylamine is used, and particularly preferably triethylamine is used.

The addition amount of the neutralizing agent is, for example, 0.4 equivalents or more, preferably 0.6 equivalents or more with respect to one equivalent of the anionic group. The addition amount of the neutralizing agent is, for example, 1.2 equivalents or less, preferably 1.0 equivalents or less with respect to one equivalent of the anionic group.

Then, in the method, the isocyanate group-terminated prepolymer (primary reaction product) is allowed to react with a chain extender to obtain a polyurethane resin (secondary reaction product).

For example, a polyurethane dispersion is obtained by reacting an isocyanate group-terminated prepolymer with a chain extender in water.

The chain extender is an organic compound that has a plurality of active hydrogen groups and causes a chain extension reaction of the isocyanate group-terminated prepolymer. Examples of the chain extender include polyamine, amino alcohol, and aminosilane.

Examples of the polyamine include an aromatic polyamine, an araliphatic polyamine, an alicyclic polyamine, and an aliphatic polyamine. Examples of the aromatic polyamine include 4,4'-diphenylmethanediamine and tolylenediamine. Examples of the araliphatic polyamine include 1,3-xylylenediamine and 1,4-xylylenediamine. Examples of the alicyclic polyamine include ethylenediamine, 3-aminomethyl-3,5,5-trimethylcyclohexylamine (also known as: isophoronediamine), 4,4'-dicyclohexylmethanediamine, 2,5-bis(aminomethyl)bicyclo[2.2.1]heptane, 2,6-bis(aminomethyl)bicyclo [2.2.1]heptane, 1,4-cyclohexanediamine, 1-amino-3-aminomethyl-3,5,5-trimethylcyclohexane, bis-(4-aminocyclohexyl)methane, diaminocyclohexane, 3,9-bis(3-aminopropyl)-2,4,8,10-tetraoxaspiro[5,5]undecane, 1,3-bis(aminomethyl) cyclohexane, and 1,4-bis(aminomethyl)cyclohexane. Examples of the aliphatic polyamine include propylenediamine, 1,3-propanediamine, 1,4-butanediamine, 1,5-pentanediamine, 1,6-hexamethylenediamine, hydrazine, hydrazine hydrate, diethylenetriamine, triethylenetetramine, tetraethylenepentamine, 1,2-diaminoethane, 1,2-diaminopropane, and 1,3-diaminopentane.

Examples of the amino alcohol include 2-((2-aminoethyl)amino)ethanol (also known as: N-(2-aminoethyl) ethanolamine) and 2-((2-aminoethyl)amino)-1-methylpropanol (also known as: N-(2-aminoethyl)isopropanolamine).

Examples of the aminosilane include a silane coupling agent containing an amino group. More specifically, examples of the silane coupling agent containing an amino group include an alkoxysilyl compound having a primary amino group and an alkoxysilyl compound having a primary amino group and a secondary amino group.

Examples of the alkoxysilyl compound having a primary amino group include $\gamma$-aminopropyltrimethoxysilane, $\gamma$-aminopropyltriethoxysilane, and N-phenyl-$\gamma$-aminopropyltrimethoxysilane.

Examples of the alkoxysilyl compound having a primary amino group and a secondary amino group include N-$\beta$ (aminoethyl)$\gamma$-aminopropyltrimethoxysilane (also known as: N-2-(aminoethyl)-3-aminopropyltrimethoxysilane), N-$\beta$(aminoethyl)$\gamma$-aminopropyltriethoxysilane (also known as: N-2-(aminoethyl)-3-aminopropyltriethoxysilane), N-$\beta$(aminoethyl) $\gamma$-aminopropylmethyldimethoxysilane (also known as: N-2-(aminoethyl)-3-aminopropylmethyldimethoxysilane), and N-$\beta$ (aminoethyl)$\gamma$-aminopropylmethyldiethoxysilane (also known as: N-2(aminoethyl)-3-aminopropylmethyldiethoxysilane).

These chain extenders may be used alone or in combination of two or more. From the viewpoint of damp heat resistance, as the chain extender, preferably a polyamine and an aminosilane are used, more preferably an alicyclic polyamine and a silane coupling agent containing an amino group are used, and even more preferably ethylenediamine and N-2-(aminoethyl)-3-aminopropyltrimethoxysilane are used.

The type and blending amount of the chain extender are adjusted so that the thermal expansion coefficient of the polyurethane layer 3 falls within the range described later. Furthermore, preferably, the type and the blending amount of the chain extender are adjusted so that the content ratio of the ester group of the polyurethane resin falls within the range described later. Furthermore, preferably, the type and the blending amount of the chain extender are adjusted so that the content ratio of the aromatic ring of the polyurethane resin falls within the range described later. Furthermore, preferably, the type and the blending amount of the chain extender are adjusted so that the content ratio of the silane coupling agent with respect to the raw material (described later) of the polyurethane resin falls within the range described later.

From the viewpoint of damp heat resistance, more preferably the chain extender contains a polyamine and an aminosilane. In such a case, the content ratio of the polyamine and the content ratio of the aminosilane are appropriately set depending on the purpose and use. For example, the content ratio of the polyamine with respect to the total amount of the polyamine and the aminosilane is, for example, 1% by mass or more, preferably 10% by mass or more, and more preferably 20% by mass or more. The content ratio of the polyamine with respect to the total amount of the polyamine and the aminosilane is, for example, 80% by mass or less, preferably 60% by mass or less, and more preferably 40% by mass or less. The content ratio of the aminosilane with respect to the total amount of the polyamine and the aminosilane is, for example, 20% by mass or more, preferably 40% by mass or more, and more preferably 60% by mass or more. The content ratio of the aminosilane with respect to the total amount of the polyamine and the aminosilane is, for example, 99% by mass or less, preferably 90% by mass or less, and more preferably 80% by mass or less.

In the chain extension reaction, for example, an isocyanate group-terminated prepolymer and a chain extender are allowed to react in water. More specifically, for example, the isocyanate group-terminated prepolymer is first dispersed in water. Next, a chain extender is added to the aqueous dispersion of the isocyanate group-terminated prepolymer so that the isocyanate group-terminated prepolymer is chain extended by the chain extender. The method of water-dispersing the isocyanate group-terminated prepolymer is not particularly limited. For example, the isocyanate group-terminated prepolymer is added to water while the water is being stirred. In this case, the amount of water is 100 to 1000 parts by mass with respect to 100 parts by mass of the isocyanate group-terminated prepolymer.

Thereafter, while the water in which the isocyanate group-terminated prepolymer is water-dispersed is being stirred, a chain extender is added dropwise to the water. In this case, the equivalent ratio (active hydrogen group/- isocyanate group) of the active hydrogen group of the chain extender with respect to the isocyanate group of the isocyanate group-terminated prepolymer is, for example, from 0.6 to 1.2. The chain extension reaction is completed, for example, at room temperature. The time to the completion of the reaction is, for example, 0.1 to 10 hours.

In addition, in the method, the organic solvent and/or water can be removed after the completion of the reaction in order to adjust the solid content concentration. In addition, in the method, water can be added after the completion of the reaction in order to adjust the solid content concentration. Furthermore, in the method, a solvent can be added in order to adjust the solid content concentration. Examples of the solvent include water, methanol, ethanol, propanol, isopropanol, acetone, methyl ethyl ketone, ethyl acetate, tetrahydrofuran, and acetonitrile. These solvents may be used alone or in combination of two or more.

In this manner, a water-dispersed polyurethane resin is obtained. That is, a polyurethane dispersion (PUD) containing a polyurethane resin is obtained.

The pH of the polyurethane dispersion is, for example, 5 or more, preferably 6 or more. The pH of the polyurethane dispersion is, for example, 11 or less, preferably 10 or less.

The average particle diameter of the polyurethane dispersion is, for example, 10 nm or more, preferably 20 nm or more, and more preferably 50 nm or more. The average particle diameter of the polyurethane dispersion is, for example, 500 nm or less, preferably 300 nm or less, and more preferably 200 nm or less.

The solid content concentration of the polyurethane dispersion is, for example, 10% by mass or more, preferably 15% by mass or more, and more preferably 20% by mass or more. The solid content concentration of the polyurethane dispersion is, for example, 60% by mass or less, preferably 50% by mass or less, and more preferably 40% by mass or less. The solid content concentration is appropriately adjusted by a known method.

The polyurethane dispersion may contain an additive. Examples of the additive include a filler, an alkoxysilane compound, a thickener, an antioxidant, a heat stabilizer, an ultraviolet an absorber, a plasticizer, an antistatic agent, a lubricant, an antiblocking agent, a surfactant, a dispersion stabilizer, a colorant, a pigment, a dye, a colloidal silica, inorganic particles, inorganic oxide particles, a layered inorganic compound, a leveling agent, a crystal nucleating agent, and a cross-linking agent. These additives may be used alone or in combination of two or more.

Hereinafter a polyurethane dispersion containing a polyurethane resin and not containing an additive may be referred to as a primary polyurethane dispersion (primary PUD). Furthermore, a polyurethane dispersion containing a polyurethane resin and an additive may be referred to as a secondary polyurethane dispersion (secondary PUD).

The secondary polyurethane dispersion preferably contains a cross-linking agent as an additive. Examples of the cross-linking agent include an epoxy cross-linking agent, a melamine cross-linking agent, a carbodiimide cross-linking agent, an aziridine cross-linking agent, an oxazoline cross-linking agent, an isocyanate cross-linking agent, and a reactive cross-linking agent. These may be used alone or in combination of two or more.

The type and the blending amount of the cross-linking agent are adjusted so that the thermal expansion coefficient of the polyurethane layer 3 falls within the range described later. Furthermore, preferably, the type and the blending amount of the cross-linking agent are adjusted so that the content ratio of the ester group of the polyurethane resin falls within the range described later. Furthermore, preferably, the type and the blending amount of the cross-linking agent are adjusted so that the content ratio of the aromatic ring of the polyurethane resin falls within the range described later. Furthermore, preferably, the type and the blending amount of the cross-linking agent are adjusted so that the content ratio of the silane coupling agent with respect to the raw material (described later) of the polyurethane resin falls within the range described later.

For example, when a polyurethane resin that is not cross-linked by a cross-linking agent (hereinafter, an uncross-linked polyurethane resin) contains a carboxy group as a hydrophilic group, preferably an epoxy cross-linking agent, a carbodiimide cross-linking agent, and an isocyanate cross-linking agent are used as a cross-linking agent.

That is, the cross-linking agent preferably contains at least one type selected from the group consisting of an epoxy cross-linking agent, a carbodiimide cross-linking agent, and an isocyanate cross-linking agent.

The epoxy cross-linking agent is a compound having an epoxy group. When the secondary polyurethane dispersion contains an epoxy cross-linking agent, the polyurethane layer 3 having excellent damp heat resistance can be obtained.

Examples of the epoxy cross-linking agent include a silane coupling agent containing an epoxy group. Examples of the silane coupling agent containing an epoxy group include an epoxy silane. Examples of the epoxysilane include 3-glycidoxypropyltrimethoxysilane, 3-glycidoxypropyltriethoxysilane, 3-glycidoxypropylmethyldimethoxysilane, 3-glycidoxypropylmethyldiethoxysilane, and 2-(3,4-epoxycyclohexyl)ethyltrimethoxysilane. These may be used alone or in combination of two or more. As the epoxysilane, preferably a trialkoxysilane is used, and more preferably 3-glycidoxypropyltrimethoxysilane is used.

The epoxy cross-linking agent (silane coupling agent containing an epoxy group) is, for example, a commercially available product. Examples of the commercially available products of the epoxy cross-linking agent include KBM-403 (glycidoxypropyltrimethoxysilane), KBE-403 (3-glycidoxypropyltriethoxysilane), KBM-402 (3-glycidoxypropylmethyldimethoxysilane), KBE-402 (3-glycidoxypropylmethyldiethoxysilane), and KBM-303 (2-(3,4-epoxycyclohexyl)ethyltrimethoxysilane) (hereinabove, manufactured by Shin-Etsu Chemical Co., Ltd.). These may be used alone or in combination of two or more.

When an epoxy cross-linking agent (preferably an epoxy silane) is used, the addition amount of the epoxy cross-linking agent is appropriately set depending on the purpose and use. For example, when the polyurethane resin contains a carboxy group as a hydrophilic group, the epoxy group in the epoxy cross-linking agent is, for example, 0.1 mol or more, preferably 0.3 mol or more, more preferably 0.5 mol or more, and even more preferably 0.8 mol or more with respect to 1.0 mol of the carboxy group in the polyurethane resin. Furthermore, the epoxy group in the epoxy cross-linking agent is, for example, 5.0 mol or less, preferably 3.0 mol or less, more preferably 2.1 mol or less, even more preferably 1.5 mol or less, and particularly preferably 1.2 mol or less with respect to 1.0 mol of the carboxy group in the polyurethane resin.

The carbodiimide cross-linking agent is a compound having a carbodiimide group (carbodiimide compound). When the secondary polyurethane dispersion contains a carbodiimide cross-linking agent, a polyurethane layer 3 having excellent damp heat resistance can be obtained.

The carbodiimide cross-linking agent is, for example, commercially available. Examples of the commercially available products of the carbodiimide cross-linking agent include carbodilite V-02, carbodilite V-02-L2, carbodilite SV-02, carbodilite V-04, carbodilite V-10, carbodilite SW-12G, carbodilite E-02, carbodilite E-03A, carbodilite E-05 (hereinabove, manufactured by Nisshinbo Chemical Inc.); Lupranate MM-103 and XTB-3003 (hereinabove, manufactured by BASF); and Stabaxol P (manufactured by Sumitomo Bayer Urethane Co., Ltd.); PICASSIAN XL-701, XL-702, XL-721, XL-725, XL-732, XL-752, XL-755, and XL-782 (hereinabove, manufactured by STAHL POLYMERS).

When a carbodiimide cross-linking agent (carbodiimide compound) is used, the addition amount of the carbodiimide cross-linking agent is appropriately set depending on the purpose and use. For example, when the polyurethane resin contains a carboxy group as a hydrophilic group, the carbodiimide group in the carbodiimide cross-linking agent is, for example, 0.05 mol or more, preferably 0.1 mol or more, more preferably 0.3 mol or more, even more preferably 0.5 mol or more, even more preferably 0.7 mol or more, and particularly preferably 0.9 mol or more with respect to 1.0 mol of the carboxy group in the polyurethane resin. In addition, the carbodiimide group in the carbodiimide cross-linking agent is, for example, 3.0 mol or less, preferably 2.0 mol or less, more preferably 1.5 mol or less, even more preferably 1.2 mol or less, and particularly preferably 1.0 mol or less with respect to 1.0 mol of the carboxy group in the polyurethane resin.

Examples of the isocyanate cross-linking agent include a known isocyanate cross-linking agent, and preferably a water-dispersible polyisocyanate is used. When the secondary polyurethane dispersion contains an isocyanate cross-linking agent, a polyurethane layer 3 having excellent damp heat resistance can be obtained.

The isocyanate cross-linking agent is, for example, commercially available. Examples of the commercially available products of the isocyanate cross-linking agent include Takenate WD-720, Takenate WD-725, Takenate WD-220, Takenate XWD-HS7, Takenate XWD-HS30 (hereinabove, manufactured by Mitsui Chemicals, Inc,); AQUANATE 100, AQUANATE 110, AQUANATE 200, and AQUANATE 210 (hereinabove, manufactured by Nippon Polyurethane Industry Co., Ltd.); DURANATE WB40-100 and DURANATE WT20-100 (hereinabove, manufactured by Asahi Kasei Chemicals Corporation); Bayhydur 3100 and Bayhydur XP2487/1 (hereinabove, manufactured by Bayer Material Science AG); and Basonat HW100 and Basonat HA100 (hereinabove, manufactured by BASF).

The water-dispersible polyisocyanate is a polyisocyanate that can be dispersed in water. Examples of the water-dispersible polyisocyanate include a polyisocyanate having an alkylene oxide group having 2 to 3 carbon atoms as a repeating unit. These may be used alone or in combination of two or more.

The water-dispersible polyisocyanate can be obtained, for example, by dispersing a polyisocyanate containing a polyethylene oxide group in water by a known dispersant (such as an ionic dispersant, a nonionic surfactant dispersant). These water-dispersible polyisocyanates may be used alone or in combination of two or more.

When an isocyanate cross-linking agent is used, the addition amount of the isocyanate cross-linking agent is appropriately set depending on the purpose and use. For example, when the polyurethane resin contains a carboxy group as a hydrophilic group, the isocyanate group in the isocyanate cross-linking agent is, for example, 0.1 mol or more, preferably 0.5 mol or more, more preferably 0.8 mol or more, and even more preferably 1.0 mol or more with respect to 1.0 mol of the carboxy group in the polyurethane resin.

Further, the isocyanate group in the isocyanate cross-linking agent is, for example, 5.0 mol or less, preferably 4.0 mol or less, more preferably 3.0 mol or less, even more preferably 2.1 mol or less, and particularly preferably 1.8 mol or less with respect to 1.0 mol of the carboxy group in the polyurethane resin.

From the viewpoint of improving the damp heat resistance, as the cross-linking agent, preferably an epoxy cross-linking agent and an isocyanate cross-linking agent are used, and more preferably an epoxy cross-linking agent is used.

The solid content concentration of the secondary polyurethane dispersion is, for example, 10% by mass or more, preferably 15% by mass or more, and more preferably 20% by mass or more. The solid content concentration of the secondary polyurethane dispersion is, for example, 60% by mass or less, preferably 50% by mass or less, and more preferably 40% by mass or less. The solid content concentration is appropriately adjusted by a known method.

The above-mentioned polyurethane dispersion (primary polyurethane dispersion and/or secondary polyurethane dispersion) is used as an anchor coating agent. If necessary, the solid content concentration of the anchor coating agent is appropriately adjusted.

The solid content concentration of the anchor coating agent is, for example, 10% by mass or more, preferably 15% by mass or more, and more preferably 20% by mass or more. The solid content concentration of the anchor coating agent is, for example, 60% by mass or less, preferably 50% by mass or less, and more preferably 40% by mass or less.

The anchor coating agent is applied, for example, to the polyolefin substrate 2 and dried by heating. The application method is not particularly limited. Examples of the application method include a dip coating method, a gravure coating method, a reverse coating method, a roll coating method, a bar coating method, a spray coating method, an air knife coating method, and an in-line coating method. The drying conditions are not particularly limited. For example, the drying temperature is, for example, 40°C or more, preferably 50°C or more. The drying temperature is, for example, 200°C or less, preferably 180°C or less. Further, the drying time is, for example, 0.1 minutes or more, preferably 0.2 minutes or more. The drying time is, for example, 10 minutes or less, preferably 5 minutes or less.

As a result, a dried product of the anchor coating agent (including the polyurethane dispersion) is formed on the polyolefin substrate 2. The dried product is a polyurethane layer 3 (anchor coat layer) containing a polyurethane resin.

In the polyurethane layer, the polyurethane resin may be a polyurethane resin cross-linked by a cross-linking agent (a polyurethane resin in a cross-linked state) or a polyurethane resin in an uncross-linked state.

That is, when the anchor coating agent (including the polyurethane dispersion) contains a cross-linking agent, as necessary, the above-described polyurethane resin (uncross-linked polyurethane resin) may be heated under appropriate conditions to cross-link the polyurethane resin. In such a case, the polyurethane layer 3 (anchor coat layer) containing a cross-linked polyurethane resin is formed.

In the above-described polyurethane layer 3, the polyurethane resin (uncross-linked polyurethane resin and/or cross-linked polyurethane resin; the same shall apply hereinafter) preferably contains an ester group. More specifically, in the above-described polyurethane resin, the active hydrogen group-containing component may contain a high molecular weight polyol. In addition, the high molecular weight polyol may contain a polyester polyol. Furthermore, the polyester polyol contains an ester group. Therefore, the polyurethane resin may contain an ester group.

In such a case, the content ratio of the ester group in the polyurethane resin is adjusted from the viewpoint of adhesiveness and damp heat resistance. More specifically, the molar amount (mmol) of the ester group with respect to the mass (g) of the polyurethane resin is adjusted.

From the viewpoint of adhesiveness and damp heat resistance, the molar amount (mmol) of the ester group is, for example, 0.5 mmol/g or more, preferably 1.0 mmol/g or more, more preferably 2.0 mmol/g or more, even more preferably 3.0 mmol/g or more, even more preferably 4.0 mmol/g or more, and particularly preferably 4.5 mmol/g or more with respect to the mass (g) of the polyurethane resin. In addition, from the viewpoint of adhesiveness and damp heat resistance, the molar amount (mmol) of the ester group is, for example, 6.0 mmol/g or less, preferably 5.5 mmol/g or less, and more preferably 5.0 mmol/g or less with respect to the mass (g) of the polyurethane resin. The content ratio of the ester group is the content ratio of the ester group (-COO-) with respect to the total solid content of the polyurethane resin, and is calculated based on the formulation of the polyurethane resin.

In the above-described polyurethane layer 3, the polyurethane resin preferably contains an aromatic ring. More specifically, in the above-described polyurethane resin, the polyisocyanate component may contain a polyisocyanate containing an aromatic ring (an aromatic polyisocyanate and/or an araliphatic polyisocyanate). In the production of the above-described polyurethane resin, the active hydrogen group-containing compound may contain a high molecular weight polyol containing an aromatic ring (aromatic ring-containing polyester polyol). In such a case, the polyurethane resin contains an aromatic ring.

In such a case, from the viewpoint of damp heat resistance, the content ratio of the aromatic ring in the polyurethane resin is adjusted. More specifically, the mass ratio (% by mass) of the aromatic ring with respect to the total amount (total mass) of the polyurethane resin is adjusted.

From the viewpoint of damp heat resistance, the content ratio of the aromatic ring is, for example, 0.01% by mass or more, preferably 0.1% by mass or more, more preferably 1.0% by mass or more, even more preferably 3.0% by mass or more, even more preferably 5.0% by mass or more, and particularly preferably 6.0% by mass or more with respect to the total amount of the polyurethane resin. In addition, from the viewpoint of damp heat resistance, the content ratio of the aromatic ring is, for example, 30% by mass or less, preferably 20% by mass or less, more preferably 10% by mass or less, and even more preferably 8.0% by mass or less with respect to the total amount of the polyurethane resin. The content ratio of the aromatic ring is the content percentage of the aromatic ring with respect to the total solid content of the polyurethane resin, and is calculated based on the formulation of the polyurethane resin.

In the above-described polyurethane layer 3, the raw material of the polyurethane resin preferably contains a silane coupling agent.

More specifically, the polyurethane resin is obtained by the reaction of a polyisocyanate component, an active hydrogen group-containing component, a chain extender, and a cross-linking agent which is used as necessary. That is, the raw material of the polyurethane resin contains a polyisocyanate component, an active hydrogen group-containing component, a chain extender, and a cross-linking agent which is used as necessary.

As described above, the chain extender may contain a silane coupling agent containing an amino group. In addition, as described above, the cross-linking agent may contain a silane coupling agent containing an epoxy group. That is, the raw material (chain extender and/or cross-linking agent) of the polyurethane resin may contain a silane coupling agent (a silane coupling agent containing an amino group and/or a silane coupling agent containing an epoxy group).

In such a case, the content ratio (total amount) of the silane coupling agent in the raw material of the polyurethane resin is adjusted from the viewpoint of adhesiveness. More specifically, the mass ratio (% by mass) of the silane coupling agent with respect to the total amount (total mass) of the raw material of the polyurethane resin is adjusted.

From the viewpoint of adhesiveness, the content ratio of the silane coupling agent is, for example, 0.01% by mass or more, preferably 0.1% by mass or more, more preferably 0.5% by mass or more, even more preferably 1.0% by mass or more, even more preferably 1.5% by mass or more, and particularly preferably 2.0% by mass or more with respect to the total amount of the raw material of the polyurethane resin. From the viewpoint of adhesiveness, the content ratio of the silane coupling agent is, for example, 20% by mass or less, preferably 15% by mass or less, more preferably 10% by mass or less, even more preferably 5.0% by mass or less, and particularly preferably 2.5% by mass or less with respect to the total amount of the raw material of the polyurethane resin.

The content ratio of the silane coupling agent is the content percentage of the silane coupling agent with respect to the total solid content of the raw material of the polyurethane resin, and is calculated based on the formulation of the polyurethane resin.

The dry mass of the polyurethane layer 3 is, for example, $0.1 g/m^2$ or more, preferably $0.3 g/m^2$ or more, and more preferably $0.5 g/m^2$ or more. The dry mass of the polyurethane layer 3 is, for example, $10 g/m^2$ or less, preferably $5 g/m^2$ or less, more preferably $3 g/m^2$ or less, and even more preferably $1.5 g/m^2$ or less.

The dry thickness of the polyurethane layer 3 is, for example, $0.1 \mu m$ or more, preferably $0.3 \mu m$ or more. The dry thickness of the polyurethane layer 3 is, for example, $10 \mu m$ or less, preferably $5 \mu m$ or less.

The polyurethane layer 3 described above has excellent adhesiveness and damp heat resistance. The damp heat resistance of the polyurethane layer 3 is evaluated by the thermal expansion coefficient.

The thermal expansion coefficient of the polyurethane layer 3, which is measured in the temperature range of 90°C to 120°C, is $150.0 \times 10^{-5} K^{-1}$ or less, preferably $120.0 \times 10^{-5} K^{-1}$, or less more preferably $100.0 \times 10^{-5} K^{-1}$ or less, even more preferably $50.0 \times 10^{-5} K^{-1}$ or less, particularly preferably $10.0 \times 10^{-5} K^{-1}$ or less. The thermal expansion coefficient of the polyurethane-layer 3 is usually $1.0 \times 10^{-5} K^{-1}$ or more. The thermal expansion coefficient of the polyurethane layer 3 is measured using a single film of the polyurethane layer 3 in conformity with Examples described later.

(4) Inorganic Vapor Deposition Layer

The inorganic vapor deposition layer 4 is disposed on a one-side surface of the polyurethane layer 3 so as to be in contact with the polyurethane layer 3. More specifically, the inorganic deposition layer 4 is formed by vapor-depositing an inorganic material on the one-side surface of the polyurethane layer 3.

Examples of the inorganic material include metal and metal oxide. Examples of the metal include magnesium, calcium, barium, titanium, zirconium, aluminum, indium, silicon, germanium, and tin, and preferably aluminum is used. Examples of the metal oxide include aluminum oxide, magnesium oxide, titanium oxide, indium oxide, silicon oxide, silicon nitride oxide, cerium oxide, calcium oxide, and tin oxide, and preferably aluminum oxide and silicon oxide are used.

Examples of the inorganic material further include a diamond-like carbon film. These may be used alone or in combination of two or more. As the inorganic material, from the viewpoint of damp heat resistance, preferably a metal is used, and more preferably aluminum is used.

Examples of a method of forming the inorganic vapor deposition layer 4 include a vacuum process. Examples of the vacuum process include, but are not limited to, a vacuum deposition method, a sputtering method, an ion plating method, and a chemical vapor deposition method (CVD method). As the vacuum process, preferably a vacuum deposition process is used. Examples of the heating method in a vacuum vapor deposition method include an electron beam heating method, a resistance heating method, and an induction heating method.

By forming the inorganic vapor deposition layer 4 on the one-side surface of the polyurethane layer 3, a laminate 1 including the polyolefin substrate 2, the polyurethane layer 3, and the inorganic vapor deposition layer 4 in this order is obtained.

The thickness of the inorganic vapor deposition layer 4 is appropriately set depending on the type of the inorganic material. The thickness of the inorganic vapor deposition layer 4 is, for example, 1 nm or more, preferably 5 nm or more. The thickness of the inorganic vapor deposition layer 4 is, for example, 500 nm or less, preferably 200 nm or less.

The total thickness of the laminate 1 is, for example, 5 $\mu$m or more, preferably 10 $\mu$m or more. The total thickness of the laminate 1 is, for example, 1 mm or less, preferably 0.5 mm or less.

(5) Overcoat layer

The laminate 1 may contain an overcoat layer (not shown) as necessary. Preferably, the laminate 1 contains an overcoat layer (not shown).

The overcoat layer (not shown) is disposed, for example, on a one-side surface of the inorganic vapor deposition layer 4 so as to be in contact with the inorganic vapor deposition layer 4. More specifically, an overcoat layer (not shown) is formed by applying an overcoat agent to the one-side surface of the inorganic vapor deposition layer 4 and drying it.

The overcoat agent is not particularly limited. Examples of the overcoat agent include known overcoat agents, and more specifically, a known polyurethane dispersion. The polyurethane dispersion can contain the above-described cross-linking agents as necessary. The polyurethane dispersion preferably contains the above-described cross-linking agent. The content ratio of the cross-linking agent is appropriately set depending on its purpose and use.

The solid content concentration of the overcoat agent is appropriately adjusted depending on the purpose and use. The overcoat agent is applied, for example, to the inorganic vapor deposition layer 4 and dried by heating. The application amount and drying conditions are appropriately set depending on the purpose and use. In this manner, a dried product of the overcoat agent is formed on the inorganic vapor deposition layer 4. The dried product is an overcoat layer (not shown). The overcoat layer (not shown) can improve the gas barrier properties of the laminate 1.

(6) Operations and Effects

In the above-described laminate 1, the polyurethane layer 3 is disposed on the polyolefin substrate 2. The inorganic vapor deposition layer 4 is disposed on the polyurethane layer 3. The polyurethane layer 3 includes a dried product of the polyurethane dispersion. The polyurethane dispersion contains a polyurethane resin. The polyurethane resin contains a reaction product of an isocyanate group-terminated prepolymer and a chain extender. The thermal expansion coefficient of the polyurethane layer 3, which is measured in the temperature range of 90°C to 120°C, is a predetermined value or less. Therefore, the polyurethane layer 3 has excellent adhesiveness and damp heat resistance. When the above-described polyurethane layer 3 is disposed on the polyolefin substrate 2, the thermal expansion of the polyolefin substrate 2 is suppressed by the polyurethane layer 3.

Therefore, the above-described laminate 1 can suppress the damage to the inorganic vapor deposition layer 4, and has excellent adhesiveness and damp heat resistance.

2. Laminate Film

(1) Entire Structure

In FIG. 2, the laminate film 10 includes the above-described laminate 1 as a first film 11, an adhesive layer 5, and a second film 12 in this order along the thickness direction of the laminate 1. In other words, in FIG. 2, the laminate 1 (first film 11), the adhesive layer 5, and the second film 12 are sequentially laminated along the thickness direction of the laminate film 10.

(2) Second Film

The second film 12 includes a polyolefin resin layer 6, and preferably consists of a polyolefin resin layer 6. When the second film 12 consists of the polyolefin resin layer 6, the laminate film 10 (see FIG. 2) can be made from a monomeric material together with the polyolefin substrate 2 of the laminate 1, and thus the recyclability can be improved.

Examples of the second film 12 (polyolefin resin layer 6) include a substrate film and a sealant film. Examples of the substrate film include a substrate containing the polyolefin resin described above. As the substrate film, preferably a polypropylene film is used. Examples of the sealant film include a polyethylene film and a cast polypropylene film. As the sealant film, preferably a cast polypropylene film is used.

The polyolefin resin layer 6 may be a single layer or a plurality of layers. The polyolefin resin layer 6 may be subjected to a surface treatment. Examples of the surface treatment include a corona discharge treatment and an anchor coating treatment. Examples of the shape of the polyolefin resin layer 6 include a sheet shape, a bottle shape, and a cup shape.

The second film 12 (polyolefin resin layer 6) has a thickness of, for example, 3 $\mu$m or more, preferably 5 $\mu$m or more. The thickness of the second film 12 (polyolefin resin layer 6) is, for example, 500 $\mu$m or less, preferably 200 $\mu$m or less.

(3) Adhesive Layer

The adhesive layer 5 is, for example, a cured coating film of a polyurethane adhesive. Examples of the polyurethane adhesive include a one-component curable polyurethane adhesive and a two-component curable polyurethane adhesive. As the polyurethane adhesive, preferably a two-component curable polyurethane adhesive is used. The two-component curable polyurethane adhesive includes, for example, a main agent and a curing agent. The main agent and the curing agent are mixed together when being used. More specifically, the adhesive layer 5 is formed by interposing a mixture of the main agent and the curing agent between the laminate 1 (first film 11) and the second film 12 and curing the mixture. The thickness of the adhesive layer 5 is appropriately set depending on the purpose and use.

(4) Method of Producing Laminate Film

The laminate film 10 is obtained, for example, by bonding the above-described laminate 1 (the first film 11) and the second film 12 with a two-component curable polyurethane adhesive.

More specifically, in the method, first, the curing agent and the main agent of a two-component curable polyurethane adhesive are mixed. Next, the mixture of the main agent and the curing agent is applied to either one of a surface of the inorganic vapor deposition layer 4 (or an overcoat layer included as necessary (not shown)) of the laminate 1 (first film 11) and a surface of the second film 12 (polyolefin resin layer 6). In this manner, a coating layer of the two-component curable polyurethane adhesive is obtained.

Thereafter, the other one (the other with respect to the one described above) of the laminate 1 (the first film 11) and the second film 12 is bonded to the coating layer of the two-component curable polyurethane adhesive by a known method. In the method, for example, a known laminating apparatus is used. Examples of the laminating apparatus include a forward transfer type coating apparatus and a reverse transfer type coating apparatus (reverse coater).

Thereafter, the coating layer of the two-component curable polyurethane adhesive is heated, as necessary, and cured, as necessary. In this manner, the coating layer of the two-component curable polyurethane adhesive is cured to form an adhesive layer 5. In other words, the adhesive layer 5 is interposed between the inorganic vapor deposition layer 4 (or an overcoat layer included as necessary (not shown)) and the polyolefin resin layer 6. The heating conditions and curing conditions are not particularly limited, and are appropriately set depending on the purpose and use.

As described above, a laminate film 10 including the polyolefin substrate 2, the polyurethane layer 3, the inorganic vapor deposition layer 4 (and an overcoat layer included as necessary (not shown)), the adhesive layer 5, and the polyolefin resin layer 6 in this order is obtained.

The laminate film 10 has a total thickness of, for example, 5 $\mu$m or more, preferably 10 $\mu$m or more. The total thickness of the laminated film 10 is, for example, 1 mm or less, preferably 0.5 mm or less.

(5) Operations and Effects

The above-described laminate film 10 includes the above-described laminate 1 as a first film 11. Therefore, the laminate film 10 has excellent adhesiveness and damp heat resistance.

The above-described laminate 1 and the laminate film 10 are preferably used as a packaging material in various industrial fields. Examples of the packaging material include food packaging films, pharmaceutical packaging films, food packaging containers, optical films, and industrial films. In particular, the laminate 1 has excellent heat resistance, and thus suitably used as a food packaging film to be subjected to high-temperature sterilization treatment and a food packaging film to be used for cooking.

Examples

Next, the present invention is described based on Examples and Comparative Examples. The present invention is however not limited by the following Examples. The "parts" and "%" are based on mass unless otherwise specified. The specific numeral values used in the description below, such as mixing ratios (content ratios), physical property values, and parameters, can be replaced with the corresponding mixing ratios (content ratios), physical property values, and parameters in the above-described "DESCRIPTION OF THE EMBODIMENTS", including the upper limit values (numeral values defined with "or less", and "less than") or the lower limit values (numeral values defined with "or more", and "more than").

1. Polyester Polyol

Preparation Example 1 (Aromatic Ring-free Polyester Polyol)

635.7 g of adipic acid (aromatic ring-free polyvalent carboxylic acid), 440.1 g of 1,6-hexanediol (aromatic ring-free polyhydric alcohol), and 130.0 g of neopentyl glycol (aromatic ring-free polyhydric alcohol) were esterified at 180-220°C under a nitrogen stream. As a result, an aromatic ring-free polyester polyol having a number average molecular weight of about 2000 was obtained.

Preparation Example 2 (Aromatic Ring-containing Polyester Polyol)

228.9 g of isophthalic acid (aromatic ring-containing polyvalent carboxylic acid), 46.4g of ethylene glycol (aromatic ring-free polyhydric alcohol), and 263.3g of neopentyl glycol (aromatic ring-free polyhydric alcohol) were esterified at 180-220°C under a nitrogen stream.
A predetermined amount of water was distilled from the reaction product of the above-described esterification reaction. Thereafter, 278.7g of sebacic acid (aromatic ring-free polyvalent carboxylic acid) was added to the reaction product, and these were esterified at 180-220°C. As a result, an aromatic ring-containing polyester polyol having a number average molecular weight of about 2500 was obtained.

Preparation Example 3 (Aromatic Ring-containing Polyester Polyol)

197.8 g of terephthalic acid (aromatic ring-containing polyvalent carboxylic acid), 197.8 g of isophthalic acid (aromatic ring-containing polyvalent carboxylic acid), 64.5 g of ethylene glycol (aromatic ring-free polyhydric alcohol), and 321.7 g of neopentyl glycol (aromatic ring-free polyhydric alcohol) were esterified at 180-220°C under a nitrogen stream.
A predetermined amount of water was distilled from the reaction product of the above-described esterification reaction. Thereafter, 240.8 g of sebacic acid (aromatic ring-free polyvalent carboxylic acid) was added to the reaction product, and these were esterified at 180-220°C. As a result, an aromatic ring-containing polyester polyol having a number average molecular weight of about 2500 was obtained.

Preparation Example 4 (Aromatic Ring-containing Polyester Polyol)

The following aromatic ring-containing polyester polyol (commercially available) was prepared.
P-2030; trade name, a reaction product of isophthalic acid (aromatic ring-containing polyvalent carboxylic acid) and 3-methyl-1,5-pentanediol (aromatic ring-free polyhydric alcohol), manufactured by KURARAY CO., LTD.

2. Polyurethane Dispersion (Primary PUD)

Synthesis Example 1 (PUD 1 to PUD 18)

Polyurethane dispersions (PUDS) were prepared in the formulations shown in Tables 1-2. That is, a polyisocyanate component, an active hydrogen group-containing component, a solvent, and, if necessary, a catalyst were mixed, and these were allowed to react at 65 to 70°C under a nitrogen atmosphere. The reaction solution was cooled when the isocyanate group concentration of the reaction solution reached the value of the isocyanate group concentration of the prepolymer shown in Tables 1 to 2. In this manner, a reaction solution containing an isocyanate group-terminated prepolymer was obtained. Next, a neutralizer was added to the reaction solution to neutralize the isocyanate-terminated prepolymer. Next, the reaction solution was added to the ion-exchange water and dispersed therein with a homodisper. Next, a chain extender was added to the reaction solution, and the isocyanate group-terminated prepolymer was subjected to a chain extension reaction for one hour. The chain extender was added to the reaction solution in a state of being dissolved in the ion-exchange water. Thereafter, the organic solvent and a portion of the ion-exchange water were distilled off. In this manner, primary polyurethane dispersions 1 to 18 (PUDS 1 to 18) were thus obtained. PUD 1 and PUD 2 had a solid content concentration of 25% by mass. PUD 3 to PUD 18 had a solid content concentration of 30% by mass.

3. Anchor Coating Agent

Production Examples 1 to 24 and Comparative Production Examples 1 to 3

According to the formulations shown in Tables 3 to 6, PUD of each Synthesis Example was mixed with water and a solvent. In addition, as necessary, PUD of each Synthesis Example and a cross-linking agent were mixed with water and a solvent. In this manner, an anchor coating agent was obtained.

4. Overcoat Agent

Formulation Examples 1 to 6

According to the formulation shown in Table 7, PUD 2 of Synthesis Example 2 was mixed with water and a solvent. In addition, as necessary, PUD 2 of Synthesis Example 2 and a cross-linking agent were mixed with water and a solvent. In this manner, an overcoat agent was obtained.

5. Laminate

Examples 1 to 25 and Comparative Examples 1 to 3

Laminates were obtained in the formulations shown in Tables 3 to 6. More specifically, first, a biaxially oriented polypropylene film (substrate, BOPP, trade name PYLEN film OT P2171, a thickness of 30 $\mu$m, manufactured by TOYOBO CO., LTD.) was prepared as a polyolefin substrate.

Next, the above-described polyolefin substrate was coated with an anchor coating agent using a bar coater. Next, the anchor coating was dried at 80°C for 1 minute. In this manner, a polyurethane layer (anchor coat layer) was formed on the surface of the polyolefin substrate. The coating amount of the anchor coating agent was adjusted so that the dry mass ($g/m^2$) was the value shown in Tables 3 to 6.

Thereafter, the polyolefin substrate and the polyurethane layer (anchor coat layer) were set in a vacuum vapor deposition apparatus (manufactured by ULVAC, Inc.). Then, aluminum, aluminum oxide, or silicon oxide was vapor-deposited ($1\times10^{-4}$ Pa vacuum conditions, RH type) on the surface of the polyurethane layer (anchor-coated layer) according to Tables 3 to 6 to form an inorganic vapor deposition layer. The inorganic vapor deposition layer made of aluminum had a thickness of 50 nm. Furthermore, the inorganic vapor deposition layer made of aluminum oxide had a thickness of 20 nm. Furthermore, the inorganic vapor deposition layer made of silicon oxide had a thickness of 30 nm.

As described above, a laminate including a polyolefin substrate, a polyurethane layer (anchor coat layer) disposed on the polyolefin substrate, and an inorganic vapor deposition layer disposed on the polyurethane layer (anchor coat layer) was obtained.

Examples 26 to 31

A laminate was produced in the formulation shown in Table 7. More specifically, in each of Examples 26 to 31, a polyolefin substrate, an anchor coat layer, and an inorganic vapor deposition layer were laminated in the same manner as in Examples 5, 16, 18, 19, 20, and 24.

Thereafter, an overcoat agent was applied to the inorganic vapor deposition layer in the formulation shown in Table 7 using a bar coater. Next, the overcoat agent was dried at 80°C for 1 minute. In this manner, an overcoat layer was formed on the surface of the inorganic vapor deposition layer. The coating amount of the overcoat agent was adjusted so that the dry mass ($g/m^2$) was the value shown in Table 7.

As described above, a laminate including a polyolefin substrate, a polyurethane layer (anchor coat layer) disposed on the polyolefin substrate, an inorganic vapor deposition layer disposed on the polyurethane layer (anchor coat layer), and an overcoat layer disposed on the inorganic vapor deposition layer was obtained.

6. Physical properties

(1) Ester Group

The content ratio (mmol/g) of the ester group in the polyurethane resin was calculated based on the charge formulation.

(2) Aromatic Ring

The content ratio (% by mass) of the aromatic ring in the polyurethane resin was calculated based on the charge formulation.

(3) Silane Coupling Agent

The content ratio (% by mass) of the silane coupling agent in the raw material of the polyurethane resin was calculated based on the charge formulation. As the amount of the silane coupling agent, the sum of the amount of the silane coupling agent (chain extender) containing the amino group and the amount of the silane coupling agent (epoxy cross-linking agent) containing the epoxy group was used.

(4) Thermal Expansion Coefficient

The thermal expansion coefficient ($K^{-1}$) of the polyurethane layer, which was measured in the temperature range of 90-120°C, was calculated in the following manner. That is, the anchor coating agent was placed in a plastic tray and dried under the conditions of 25°C and a relative humidity 55% for 1 day, and then heated at 60°C for 5 days. In this manner, an anchor coat film (thickness 100$\mu$m) was obtained.

Next, the anchor coat film was cut into length 15mm $\times$ width 5mm. In this manner, a sample was obtained. Thereafter, the thermal expansion coefficient of the sample was measured in the temperature range of 90-120°C using a thermomechanical analyzer (SHIMADZU CORPORATION, TMA-50). The measurement conditions were set to a nitrogen atmosphere (a gas flow rate 40 mL/min), a load setting 0 g, and a rate of temperature increase of 10°C/min. Furthermore, the measurement was carried out in conformity with JIS K7197(1991).

7. Evaluations

(1) Laminate Film

A polyurethane adhesive was applied to the inorganic vapor deposition layer of the laminate so as to have a dry thickness 3.0g/$m^2$, and then dried. The polyurethane adhesive was a mixture of the following main agent, curing agent, and ethyl acetate. More specifically, ethyl acetate was added to a mixture of the main agent and the curing agent to adjust the solid content concentration of the mixture to 25% by mass.

Main agent; Takelac A-626, manufactured by Mitsui Chemicals Inc., 8.0 parts by mass
Curing agent; TAKENATE A-50, manufactured by Mitsui Chemicals Inc., 1.0 parts by mass

Next, a cast polypropylene film (CPP, Tohcello CP RXC-22, #60, manufactured by Mitsui Chemicals Tohcello, Inc.) was laminated on the coated surface to which the polyurethane adhesive was applied, and aged at 40°C for 3 days. In this manner, a laminate film was obtained.

(2) Gas barrier Properties and Hot Water Resistance

The oxygen transmission rate (cc/$m^2$·day·atm) of the laminated film was measured under the following conditions in conformity with JIS K7126-2 (2006).

Device; an oxygen permeability tester, trade name OX-TRAN2/20, manufactured by MOCON
Temperature; 20°C
Humidity; 80%RH

Next, the laminate film was immersed in hot water at 121°C for 30 minutes and thereby hydrothermally treated. Thereafter, the oxygen transmission rate of the hydrothermally treated laminate film was measured under the above-described conditions.
Thereafter, the increase rate of the oxygen transmission rate was determined by the following formula. The higher the value of the increase rate of the oxygen transmission rate is, the lower the evaluation of the heat water resistance is.

However, in Examples 26 to 31, the oxygen transmission rate of the laminate also depends on the hot water resistance of the overcoat layer, and may be significantly different before and after the hydrothermal treatment. Therefore, in Examples 26 to 31, in order to evaluate the hot water resistance derived from the polyurethane layer, the oxygen transmission rate (cc/m$^2$·day·atm) after the hydrothermal treatment was confirmed instead of the increase rate (%) of the oxygen transmission rate.

Increase rate (%) of oxygen transmission rate = [(Oxygen transmission rate after hydrothermal treatment-Oxygen transmission rate before hydrothermal treatment)/Oxygen transmission rate before hydrothermal treatment]

(3) Adhesiveness and Hot Water Resistance

The laminate strength of the laminate film was measured by a T-peel test (15 mm width) in conformity with JIS K 6854 (1999).

More specifically, first, the biaxially oriented polypropylene film (the lowermost layer, BOPP) and the cast polypropylene film (the uppermost layer, CPP) were gripped and pulled in the opposite direction to expose the interface between the biaxially oriented polypropylene film (substrate) and the polyurethane layer (anchor coat layer). Then, the peel strength (laminate strength) of the interface between the biaxially oriented polypropylene film (substrate) and the polyurethane layer (anchor coat layer) was measured by a T-peel test.

Next, the laminate film was immersed in hot water at 121°C for 30 minutes and thereby hydrothermally treated. Thereafter, the peel strength (laminate strength) of the hydrothermally treated laminate film was measured under the same conditions as described above.

Table 1

Table 1

| No. | | | Form. Ex. 1 | Form. Ex. 2 | Form. Ex. 3 | Form. Ex. 4 | Form. Ex. 5 | Form. Ex. 6 | Form. Ex. 7 | Form. Ex. 8 | Form. Ex. 9 | Form. Ex. 10 | Form. Ex. 11 |
|---|---|---|---|---|---|---|---|---|---|---|---|---|---|
| | | | PUD1 | PUD2 | PUD3 | PUD4 | PUD5 | PUD6 | PUD7 | PUD8 | PUD9 | PUD10 | PUD11 |
| Blending formulations (parts by mass) | Polyisocyanate component | m−XDI | 148.2 | 148.2 | − | − | − | − | − | − | − | − | − |
| | | $H_{12}MDI$ | 25.8 | 25.8 | 115.1 | 115.1 | 94.0 | 90.0 | 90.0 | 90.0 | 90.0 | 90.0 | 90.0 |
| | Active hydrogen group-containing component | Prep. Ex. 1 | − | − | 125.2 | 125.2 | 43.3 | − | − | − | − | − | − |
| | | Prep. Ex. 2 | − | − | − | − | 85.3 | 161.0 | 161.0 | 161.0 | 161.0 | 161.0 | 161.0 |
| | | Prep. Ex. 3 | − | − | − | − | − | − | − | − | − | − | − |
| | | Prep. Ex. 4 | − | − | − | − | − | − | − | − | − | − | − |
| | | TEG | − | − | 18.8 | 18.8 | 2.4 | 2.4 | 2.4 | 2.4 | 2.4 | 2.4 | 2.4 |
| | | EG | 29.9 | 29.9 | − | − | − | − | − | − | − | − | − |
| | | TMP | 2.3 | 2.3 | − | − | − | − | − | − | − | − | − |
| | | DMPA | 17.0 | 17.0 | 16.8 | 16.8 | 22.0 | 22.0 | 22.0 | 22.0 | 22.0 | 22.0 | 22.0 |
| | Catalyst | Stannous octoat | − | − | 0.05 | 0.05 | 0.05 | 0.05 | 0.05 | 0.05 | 0.05 | 0.05 | 0.05 |
| | Solvent | MEK | 126.9 | 126.9 | 135.6 | 135.6 | 152.0 | 165.0 | 165.0 | 165.0 | 165.0 | 165.0 | 165.0 |
| | | AN | − | − | − | − | − | − | − | − | − | − | − |
| | Neutralizing agent | TEA | 12.6 | 12.6 | 12.4 | 12.4 | 12.0 | 11.4 | 11.4 | 11.4 | 11.4 | 11.4 | 11.4 |
| | Ion−exchange water | | 1100.0 | 1100.0 | 1100.0 | 1100.0 | 900.0 | 900.0 | 900.0 | 900.0 | 900.0 | 900.0 | 900.0 |
| | Chain extender | Aminosilane | − | − | 5.2 | 5.2 | 7.2 | 7.2 | 7.2 | − | 2.1 | 9.2 | 15.2 |
| | | AEA | 24.8 | − | 9.8 | − | − | 6.2 | − | − | − | − | − |
| | | EDA | − | 14.3 | − | 5.7 | 3.6 | − | 3.6 | 5.7 | 5.1 | 3.1 | 1.4 |
| Isocyanate group concentration of prepolymer | | % by mass | 6.2 | 6.2 | 2.6 | 2.6 | 2.4 | 1.8 | 1.8 | 1.8 | 1.8 | 1.8 | 1.8 |

Table 2

| No. | | | Form. Ex. 12 | Form. Ex. 13 | Form. Ex. 14 | Form. Ex. 15 | Form. Ex. 16 | Form. Ex. 17 | Form. Ex. 18 |
|---|---|---|---|---|---|---|---|---|---|
| | | | PUD12 | PUD13 | PUD14 | PUD15 | PUD16 | PUD17 | PUD18 |
| Blending formulations (parts by mass) | Polyisocyanate component | m—XDI | – | – | 76.8 | – | – | – | 115.6 |
| | | $H_{12}MDI$ | 90.0 | 90.0 | – | 195.5 | 164.8 | 142.7 | 20.1 |
| | Active hydrogen group-containing component | Prep. Ex. 1 | – | – | – | – | – | – | – |
| | | Prep. Ex. 2 | – | – | – | – | 41.8 | 78.5 | 53.3 |
| | | Prep. Ex. 3 | 161.0 | – | – | – | – | – | – |
| | | Prep. Ex. 4 | – | 161.0 | 155.6 | – | – | – | – |
| | | TEG | 2.4 | 2.4 | 2.9 | 57.0 | 41.8 | 32.1 | – |
| | | EG | – | – | – | – | – | – | 18.6 |
| | | TMP | – | – | – | – | – | – | 3.4 |
| | | DMPA | 22.0 | 22.0 | 26.1 | 20.3 | 20.5 | 19.1 | 18.0 |
| | Catalyst | Stanoct | 0.05 | 0.05 | – | 0.05 | 0.05 | 0.05 | – |
| | Solvent | MEK | 165.0 | 165.0 | 161.7 | 232.0 | 229.0 | 231.3 | 114.0 |
| | | AN | – | – | – | – | – | – | – |
| | Neutralizing agent | TEA | 11.4 | 11.4 | 13.8 | 11.0 | 11.0 | 10.1 | 13.3 |
| | Ion-exchange water | | 900.0 | 900.0 | 900.0 | 900.0 | 900.0 | 800.0 | 997.4 |
| | Chain extender | Aminosilane | 7.2 | 7.2 | 9.0 | 5.3 | 4.6 | 3.9 | – |
| | | AEA | – | – | – | – | – | – | – |
| | | EDA | 3.6 | 3.6 | 4.5 | 10.7 | 9.2 | 7.9 | 18.5 |
| Isocyanate group concentration of prepolymer | | % by mass | 1.8 | 1.8 | 2.3 | 3.5 | 3.0 | 2.6 | 4.8 |

Table 2

Table 3

| No. | | | | | Comp. Ex. 1 | Comp. Ex. 2 | Ex. 1 | Ex. 2 | Ex. 3 | Ex. 4 | Ex. 5 |
|---|---|---|---|---|---|---|---|---|---|---|---|
| Polyolefin substrate | | | | | BOPP | BOPP | BOPP | BOPP | BOPP | BOPP | BOPP |
| Inorganic vapor deposition layer | | | | | AL | AL | AL | AL | AL | AL | AL |
| Polyurethane layer / Blending formulations (parts by mass) | Ancho coat layer | Primary PUD | | No. | Prod. Comp. Ex. 1 | Prod. Comp. Ex. 2 | Prod. Ex. 1 | Prod. Ex. 2 | Prod. Ex. 3 | Prod. Ex. 4 | Prod. Ex. 5 |
| | | | | PUD1 | 40.0 | – | – | – | – | – | – |
| | | | | PUD2 | – | 40.0 | – | – | – | – | – |
| | | | | PUD3 | – | – | 33.3 | – | – | – | – |
| | | | | PUD4 | – | – | – | 33.3 | – | – | – |
| | | | | PUD5 | – | – | – | – | 33.3 | – | – |
| | | | | PUD6 | – | – | – | – | – | 33.3 | – |
| | | | | PUD7 | – | – | – | – | – | – | 33.3 |
| | | | | PUD8 | – | – | – | – | – | – | – |
| | | | | PUD9 | – | – | – | – | – | – | – |
| | | | | PUD10 | – | – | – | – | – | – | – |
| | | | | PUD11 | – | – | – | – | – | – | – |
| | | | | PUD12 | – | – | – | – | – | – | – |
| | | | | PUD13 | – | – | – | – | – | – | – |
| | | | | PUD14 | – | – | – | – | – | – | – |
| | | | | PUD15 | – | – | – | – | – | – | – |
| | | | | PUD16 | – | – | – | – | – | – | – |
| | | | | PUD17 | – | – | – | – | – | – | – |
| | | | | PUD18 | – | – | – | – | – | – | – |
| | | Solvent | | 2-propanol | 15.0 | 15.0 | 15.0 | 15.0 | 15.0 | 15.0 | 15.0 |
| | | Water | | Ion-exchange water | 45.0 | 45.0 | 51.7 | 51.7 | 51.7 | 51.7 | 51.7 |
| | | Cross-linking agent | | KBM-403 | – | – | – | – | – | – | – |
| | | | | SV-02 | – | – | – | – | – | – | – |
| | | | | 3100 | – | – | – | – | – | – | – |
| | Film thickness | | | g/m$^2$ | 1.0 | 1.0 | 1.0 | 1.0 | 1.0 | 1.0 | 1.0 |
| | Blending amount of cross-linking agent (Epoxy group, isocyanate group, carbodiimide group /carboxy group in polyurethane resin)[molar ratio] | | | | – | – | – | – | – | – | – |
| | Ester group in polyurethane resin | | | mmol/g | 0 | 0 | 3.5 | 3.5 | 4.1 | 4.7 | 4.7 |
| | Aromatic ring in polyurethane resin | | | % by mass | 21.7 | 22.6 | 0 | 0 | 4.5 | 7.7 | 7.7 |
| | Silane coupling agent in raw material | | | % by mass | 0 | 0 | 1.7 | 1.7 | 2.7 | 2.4 | 2.4 |
| | Thermal expansion coefficient (90°C–120°C) | | | $10^{-5}$/K | 1070 | 174 | 140 | 62 | 59 | 72 | 49.5 |
| Evaluations | Gas barrier properties | Oxygen transmission rate before hydrothermal treatment | | cc/(m2·day·atm) | 0.6 | 0.6 | 1.0 | 1.0 | 1.0 | 1.0 | 1.0 |
| | | Oxygen transmission rate after hydrothermal treatment | | cc/(m2·day·atm) | 15 | 1.0 | 2.4 | 2.1 | 1.9 | 2 | 1.5 |
| | | Increase rate of oxygen transmission rate | | % | 2400% | 67% | 140% | 110% | 90% | 100% | 50% |
| | Adhesiveness | Peel strength before hydrothermal treatment | | N/mm$^2$ | 0.2 | 0.3 | 2.2 | 2.2 | 2.0 | 1.9 | 2.0 |
| | | Peel strength after hydrothermal treatment | | N/mm$^2$ | 0.2 | 0.3 | 2.0 | 2.3 | 2.2 | 1.9 | 2.2 |

Table 3

Table 4

| No. | | | | | Ex. 6 | Ex. 7 | Ex. 8 | Ex. 9 | Ex. 10 | Ex. 11 | Ex. 12 |
|---|---|---|---|---|---|---|---|---|---|---|---|
| Polyolefin substrate | | | | | BOPP | BOPP | BOPP | BOPP | BOPP | BOPP | BOPP |
| Inorganic vapor deposition layer | | | | | AL | AL | AL | AL | AL | AL | AL |
| Polyurethane layer Blending formulations (parts by mass) | Anchor coat layer | Primary PUD | No. | | Prod. Ex. 6 | Prod. Ex. 7 | Prod. Ex. 8 | Prod. Ex. 9 | Prod. Ex. 10 | Prod. Ex. 11 | Prod. Ex. 12 |
| | | | | PUD1 | – | – | – | – | – | – | – |
| | | | | PUD2 | – | – | – | – | – | – | – |
| | | | | PUD3 | – | – | – | – | – | – | – |
| | | | | PUD4 | – | – | – | – | – | – | – |
| | | | | PUD5 | – | – | – | – | – | – | – |
| | | | | PUD6 | – | – | – | – | – | – | – |
| | | | | PUD7 | – | – | – | – | – | – | – |
| | | | | PUD8 | 33.3 | – | – | – | – | – | – |
| | | | | PUD9 | – | 33.3 | – | – | – | – | – |
| | | | | PUD10 | – | – | 33.3 | – | – | – | – |
| | | | | PUD11 | – | – | – | 33.3 | – | – | – |
| | | | | PUD12 | – | – | – | – | 33.3 | – | – |
| | | | | PUD13 | – | – | – | – | – | 33.3 | – |
| | | | | PUD14 | – | – | – | – | – | – | 33.3 |
| | | | | PUD15 | – | – | – | – | – | – | – |
| | | | | PUD16 | – | – | – | – | – | – | – |
| | | | | PUD17 | – | – | – | – | – | – | – |
| | | | | PUD18 | – | – | – | – | – | – | – |
| | | Solvent | 2-propanol | | 15.0 | 15.0 | 15.0 | 15.0 | 15.0 | 15.0 | 15.0 |
| | | Water | Ion-exchange water | | 51.7 | 51.7 | 51.7 | 51.7 | 51.7 | 51.7 | 51.7 |
| | | Cross-linking agent | KBM-403 | | – | – | – | – | – | – | – |
| | | | SV-02 | | – | – | – | – | – | – | – |
| | | | 3100 | | – | – | – | – | – | – | – |
| | Film thickness | | $g/m^2$ | | 1.0 | 1.0 | 1.0 | 1.0 | 1.0 | 1.0 | 1.0 |
| | Blending amount of cross-linking agent (Epoxy group, isocyanate group, carbodiimide group /carboxy group in polyurethane resin)[molar ratio] | | | | – | – | – | – | – | – | – |
| | Ester group in polyurethane resin | | mmol/g | | 4.8 | 4.8 | 4.7 | 4.6 | 5.1 | 4.4 | 4.4 |
| | Aromatic ring in polyurethane resin | | % by mass | | 7.9 | 7.8 | 7.7 | 7.7 | 10.6 | 16.2 | 26.3 |
| | Silane coupling agent in raw material | | % by mass | | 0.0 | 0.7 | 3.1 | 5.0 | 2.4 | 2.4 | 3.1 |
| | Thermal expansion coefficient (90°C-120°C) | | $10^{-5}/K$ | | 55 | 54 | 54 | 51 | 51 | 51 | 51 |
| Evaluations | Gas barrier properties | Oxygen transmission rate before hydrothermal treatment | cc/(m2·day·atm) | | 1.0 | 1.0 | 1.0 | 1.3 | 1.0 | 1.0 | 1.0 |
| | | Oxygen transmission rate after hydrothermal treatment | cc/(m2·day·atm) | | 1.7 | 1.7 | 1.9 | 2.2 | 1.4 | 1.4 | 1.4 |
| | | Increase rate of oxygen transmission rate | % | | 70% | 70% | 90% | 69% | 40% | 40% | 40% |
| | Adhesiveness | Peel strength before hydrothermal treatment | $N/mm^2$ | | 1.7 | 1.7 | 1.7 | 1.8 | 2.2 | 2.5 | 2.4 |
| | | Peel strength after hydrothermal treatment | $N/mm^2$ | | 1.3 | 1.7 | 1.7 | 1.5 | 2.3 | 2.2 | 2.3 |

23

Table 5

| | | | Ex. 13 | Ex. 14 | Ex. 15 | Ex. 16 | Ex. 17 | Ex. 18 | Ex. 19 | Ex. 20 |
|---|---|---|---|---|---|---|---|---|---|---|
| No. | | | | | | | | | | |
| Polyolefin substrate | | | BOPP | BOPP | BOPP | BOPP | BOPP | BOPP | BOPP | BOPP |
| Inorganic vapor deposition layer | | | AL | AL | AL | AL | AL | AL | AL | SiOx |
| Polyurethane layer / Blending formulations (parts by mass) | Primary PUD | No. | Prod. Ex. 13 | Prod. Ex. 14 | Prod. Ex. 15 | Prod. Ex. 16 | Prod. Ex. 17 | Prod. Ex. 18 | Prod. Ex. 19 | Prod. Ex. 20 |
| | | PUD1 | - | - | - | - | - | - | - | - |
| | | PUD2 | - | - | - | - | - | - | - | - |
| | | PUD3 | - | - | - | - | - | - | - | - |
| | | PUD4 | - | - | - | - | - | - | - | - |
| | | PUD5 | - | - | - | - | - | - | - | - |
| | | PUD6 | - | - | - | - | - | - | - | - |
| | | PUD7 | 33.3 | 33.3 | - | - | 26.6 | 27.6 | 28.3 | 27.6 |
| | | PUD8 | - | - | 30.0 | 30.0 | - | - | - | - |
| | | PUD9 | - | - | - | - | - | - | - | - |
| | | PUD10 | - | - | - | - | - | - | - | - |
| | | PUD11 | - | - | - | - | - | - | - | - |
| | | PUD12 | - | - | - | - | - | - | - | - |
| | | PUD13 | - | - | - | - | - | - | - | - |
| | | PUD14 | - | - | - | - | - | - | - | - |
| | | PUD15 | - | - | - | - | - | - | - | - |
| | | PUD16 | - | - | - | - | - | - | - | - |
| | | PUD17 | - | - | - | - | - | - | - | - |
| | | PUD18 | - | - | - | - | - | - | - | - |
| | Solvent | 2-propanol | 15.0 | 15.0 | 15.0 | 15.0 | 15.0 | 15.0 | 15.0 | 15.0 |
| | Water | Ion-exchange water | 51.7 | 51.7 | 54.0 | 54.0 | 56.4 | 53.2 | 55.2 | 53.2 |
| | Cross-linking agent | KBM-403 | - | - | 1.0 | 1.0 | 2.0 | - | - | - |
| | | SV-02 | - | - | - | - | - | 4.2 | - | 4.2 |
| | | 3100 | - | 1.5 | - | - | - | - | 1.5 | - |
| Film thickness (g/m²) | | | 0.5 | 1.5 | 1.0 | 1.0 | 1.0 | 1.0 | 1.0 | 1.0 |
| Blending amount of cross-linking agent [Epoxy group, isocyanate group, carbodiimide group /carboxy group in polyurethane resin][molar ratio] | | | — | — | 0.9 | 0.9 | 1.8 | 0.9 | 1.6 | 0.9 |
| Ester group in polyurethane resin (mmol/g) | | | 4.7 | 4.7 | 4.3 | 4.2 | 3.8 | 3.9 | 4.0 | 3.9 |
| Aromatic ring in polyurethane resin (% by mass) | | | 7.7 | 7.7 | 7.1 | 6.9 | 6.2 | 6.4 | 6.5 | 6.4 |
| Silane coupling agent in raw material (% by mass) | | | 2.4 | 2.4 | 10.0 | 12.2 | 21.9 | 2.0 | 2.0 | 2.0 |
| Thermal expansion coefficient (90°C-120°C) ($10^{-6}$/K) | | | 49.5 | 49.5 | 30 | 21 | 82 | 8 | 34 | 8 |
| Evaluations | Gas barrier properties | Oxygen transmission rate before hydrothermal treatment (cc/(m²·day·atm)) | 1.0 | 1.0 | 1.0 | 1.0 | 1.0 | 1.0 | 1.0 | 1.0 |
| | | Oxygen transmission rate after hydrothermal treatment (cc/(m²·day·atm)) | 1.5 | 1.4 | 1.6 | 1.4 | 2.5 | 1.2 | 1.6 | 1.2 |
| | | Increase rate of oxygen transmission rate (%) | 50% | 40% | 60% | 40% | 150% | 20% | 60% | 20% |
| | Adhesiveness | Peel strength before hydrothermal treatment (N/mm²) | 2.3 | 2.1 | 1.7 | 2.1 | 1.4 | 2.2 | 2.1 | 2.1 |
| | | Peel strength after hydrothermal treatment (N/mm²) | 2.3 | 2.2 | 1.8 | 2.2 | 1.3 | 2.4 | 2.2 | 2.3 |

Table 6

| | | | Comp. Ex. 3 | Ex. 21 | Ex. 22 | Ex. 23 | Ex. 24 | Ex. 25 |
|---|---|---|---|---|---|---|---|---|
| Polyolefin substrate | | | BOPP | BOPP | BOPP | BOPP | BOPP | BOPP |
| Inorganic vapor deposition layer | | | AL | AL | AL | AlOx | AlOx | AL |
| Polyurethane layer — Blending formulations (parts by mass) | No. | | Prod. Comp. Ex. 3 | Prod. Ex. 21 | Prod. Ex. 22 | Prod. Ex. 23 | Prod. Ex. 24 | Prod. Ex. 25 |
| | Anchor coat layer — Primary PUD | PUD1 | – | – | – | – | – | – |
| | | PUD2 | – | – | – | – | – | – |
| | | PUD3 | – | – | – | – | – | – |
| | | PUD4 | – | – | – | – | – | – |
| | | PUD5 | – | – | – | – | – | – |
| | | PUD6 | – | – | – | – | – | – |
| | | PUD7 | – | – | – | 33.3 | 27.6 | – |
| | | PUD8 | – | – | – | – | – | – |
| | | PUD9 | – | – | – | – | – | – |
| | | PUD10 | – | – | – | – | – | – |
| | | PUD11 | – | – | – | – | – | – |
| | | PUD12 | – | – | – | – | – | – |
| | | PUD13 | – | – | – | – | – | – |
| | | PUD14 | – | – | – | – | – | – |
| | | PUD15 | 33.3 | – | – | – | – | 40.0 |
| | | PUD16 | – | 33.3 | – | – | – | 15.0 |
| | | PUD17 | – | – | 33.3 | – | – | – |
| | | PUD18 | – | – | – | – | – | – |
| | Solvent | 2-propanol | 15.0 | 15.0 | 15.0 | 15.0 | 15.0 | 15.0 |
| | Water | Ion-exchange water | 51.7 | 51.7 | 51.7 | 51.7 | 53.2 | 45.0 |
| | Cross-linking agent | KBM-403 | – | – | – | – | – | – |
| | | SV-02 | – | – | – | – | 4.2 | – |
| | | 3100 | – | – | – | – | – | – |
| | Film thickness | g/m² | 1.0 | 1.0 | 1.0 | 1.0 | 1.0 | 1.0 |
| | Blending amount of cross-linking agent (Epoxy group, isocyanate group, carbodiimide group / carboxy group in polyurethane resin) [molar ratio] | | – | – | – | – | 0.9 | – |
| Evaluations | Ester group in polyurethane resin | mmol/g | 0 | 1.2 | 2.3 | 4.7 | 3.9 | 1.8 |
| | Aromatic ring in polyurethane resin | % by mass | 0.0 | 2.0 | 3.8 | 7.7 | 6.4 | 19.8 |
| | Silane coupling agent in raw material | % by mass | 1.8 | 1.6 | 1.3 | 2.4 | 2.0 | 0 |
| | Thermal expansion coefficient (90°C–120°C) | 10⁻⁵/K | 180 | 135 | 83 | 49.5 | 8 | 90 |
| | Gas barrier properties — Oxygen transmission rate before hydrothermal treatment | cc/(m2·day·atm) | 1.0 | 1.0 | 1.0 | 1.0 | 1.1 | 0.6 |
| | Oxygen transmission rate after hydrothermal treatment | cc/(m2·day·atm) | 4.1 | 2.4 | 1.9 | 1.9 | 1.5 | 1.0 |
| | Increase rate of oxygen transmission rate | % | 310% | 140% | 90% | 90% | 36% | 67% |
| | Adhesiveness — Peel strength before hydrothermal treatment | N/mm² | 0.4 | 1.2 | 1.4 | 2.2 | 2.8 | 1.0 |
| | Peel strength after hydrothermal treatment | N/mm² | 0.3 | 1.2 | 1.7 | 2.3 | 2.6 | 0.8 |

Table 7

| No. | | | | | Ex. 26 | Ex. 27 | Ex. 28 | Ex. 29 | Ex. 30 | Ex. 31 |
|---|---|---|---|---|---|---|---|---|---|---|
| Polyolefin substrate | | | | | BOPP | BOPP | BOPP | BOPP | BOPP | BOPP |
| Inorganic vapor deposition layer | | | | | AL | AL | AL | AL | SiOx | AlOx |
| Polyurethane layer Blending formulations (parts by mass) | Anchor coat layer | No. | | | Prod. Ex. 5 | Prod. Ex. 16 | Prod. Ex. 18 | Prod. Ex. 19 | Prod. Ex. 20 | Prod. Ex. 24 |
| | | Primary PUD | PUD7 | | 33.3 | 30.0 | 27.6 | 28.3 | 27.6 | 27.6 |
| | | Solvent | 2-propanol | | 15.0 | 15.0 | 15.0 | 15.0 | 15.0 | 15.0 |
| | | Water | Ion-exchange water | | 51.7 | 54.0 | 53.2 | 55.2 | 53.2 | 53.2 |
| | | Cross-linking agent | KBM-403 | | – | 1.0 | – | – | – | – |
| | | | SV-02 | | – | – | 4.2 | – | 4.2 | 4.2 |
| | | | 3100 | | – | – | – | 1.5 | – | – |
| | Film thickness | | g/m² | | 1.0 | 1.0 | 1.0 | 1.0 | 1.0 | 1.0 |
| | Blending amount of cross-linking agent (Epoxy group, isocyanate group, carbodiimide group /carboxy group in polyurethane resin)[molar ratio] | | | | – | 0.9 | 0.9 | 1.6 | 0.9 | 0.9 |
| | Ester group in polyurethane resin | | mmol/g | | 4.7 | 4.2 | 3.9 | 4.0 | 3.9 | 3.9 |
| | Aromatic ring in polyurethane resin | | % by mass | | 7.7 | 6.9 | 6.4 | 6.5 | 6.4 | 6.4 |
| | Silane coupling agent in raw material | | % by mass | | 2.4 | 12.2 | 2.0 | 2.0 | 2.0 | 2.0 |
| | Thermal expansion coefficient (90°C–120°C) | | 10⁻⁵/K | | 49.5 | 21 | 8 | 34 | 8 | 8 |
| Blending formulation of overcoat layer (parts by mass) | Overcoat agent | No. | | | Form. Ex. 1 | Form. Ex. 2 | Form. Ex. 3 | Form. Ex. 4 | Form. Ex. 5 | Form. Ex. 6 |
| | | Primary PUD | PUD2 | | 40.0 | 36.4 | 34.2 | 34.8 | 34.2 | 34.2 |
| | | Solvent | 2-propanol | | 15.0 | 15.0 | 15.0 | 15.0 | 15.0 | 15.0 |
| | | Water | Ion-exchange water | | 45.0 | 47.7 | 47.2 | 48.9 | 47.2 | 47.2 |
| | | Cross-linking agent | KBM-403 | | – | 0.9 | – | – | – | – |
| | | | SV-02 | | – | – | 3.6 | – | 3.6 | 3.6 |
| | | | 3100 | | – | – | – | 1.3 | – | – |
| | Film thickness | | g/m² | | 1.0 | 1.0 | 1.0 | 1.0 | 1.0 | 1.0 |
| Evaluations | Gas barrier properties | Oxygen transmission rate before hydrothermal treatment | cc/(m2·day·atm) | | 0.4 | 0.4 | 0.4 | 0.4 | 0.4 | 0.4 |
| | | Oxygen transmission rate after hydrothermal treatment | cc/(m2·day·atm) | | 1.3 | 0.5 | 0.5 | 1.4 | 0.5 | 0.7 |
| | | Increase rate of oxygen transmission rate | % | | 225% | 25% | 25% | 250% | 25% | 75% |
| | Adhesiveness | Peel strength before hydrothermal treatment | N/mm² | | 2.0 | 2.2 | 2.3 | 2.1 | 2.2 | 2.5 |
| | | Peel strength after hydrothermal treatment | N/mm² | | 2.1 | 2.3 | 2.4 | 2.2 | 2.3 | 2.3 |

Table 7

The details of abbreviations in Tables are as follows.

m-XDI; m-xylylene diisocyanate
$H_{12}$MDI; methylenebis(cyclohexyl isocyanate)
MEK; methyl ethyl ketone
AN; acetonitrile
TEA; triethylamine
TEG; triethylene glycol
EG; ethylene glycol
TMP; trimethylolpropane
DMPA; dimethylolpropionic acid
Stanoct; stannous octylate, urethanization catalyst
Aminosilane; N-2-(aminoethyl)-3-aminopropyltrimethoxysilane
AEA; 2-((2-aminoethyl)amino)ethanol
EDA; ethylenediamine
BOPP; biaxially oriented polypropylene film
AL; aluminum
AlOx; aluminium oxide
SiOx; silicon oxide
KBM-403: trade name KBM-403, epoxy cross-linking agent, 3-glycidoxypropyltrimethoxysilane, silane coupling agent containing an epoxy group, manufactured by Shin-Etsu Chemical Co., Ltd
SV-02; trade name CARBODILITE SV-02, carbodiimide cross-linking agent, solid content concentration 40% by mass, manufactured by Nisshinbo Chemical Inc.
3100: Trade name Bayhydur 3100, isocyanate cross-linking agent, manufactured by BASF

Description of Reference Numerals

1 Laminate
2 Polyolefin substrate
3 Polyurethane layer
4 Inorganic vapor deposition layer
5 Adhesive layer
6 Polyolefin resin layer

While the illustrative embodiments of the present invention are provided in the above-described description, such is for illustrative purpose only and it is not to be construed as limiting in any manner. Modification and variation of the present invention that will be obvious to those skilled in the art is to be covered by the following claims.

Industrial Applicability

The laminate of the present invention can be preferably used, for example, for food packaging films, pharmaceutical packaging films, food packaging containers, optical films, and industrial films.

**Claims**

**1.**   A laminate comprising:

a polyolefin substrate;
a polyurethane layer disposed on the polyolefin substrate; and
an inorganic vapor deposition layer disposed on the polyurethane layer,

wherein a thermal expansion coefficient of the polyurethane layer is $150 \times 10^{-5} K^{-1}$ or less, the thermal expansion coefficient being measured in a temperature range of 90°C to 120°C.

**2.**   The laminate according to claim 1,

wherein the polyurethane layer includes a dried product of a polyurethane dispersion, and
wherein the polyurethane dispersion contains a polyurethane resin.

3. The laminate according to claim 2,

wherein the polyurethane resin contains an ester group, and
wherein a molar amount (mmol) of the ester group is 0.5 mmol/g or more and 6.0 mmol/g or less with respect to a mass (g) of the polyurethane resin.

4. The laminate according to claim 3,

wherein the polyurethane resin contains an aromatic ring, and
wherein a content ratio of the aromatic ring is 0.01% by mass or more and 30% by mass or less with respect to a total amount of the polyurethane resin.

5. The laminate according to claim 2,

wherein the polyurethane resin contains a reaction product of an isocyanate group-terminated prepolymer and a chain extender, and
wherein the isocyanate group-terminated prepolymer contains:
a reaction product of

a polyisocyanate component,
a high molecular weight polyol containing a polyester polyol,
a low molecular weight polyol, and
a carboxyl group-containing polyol.

6. The laminate according to claim 2,

wherein the polyurethane dispersion contains a cross-linking agent, and
wherein the cross-linking agent includes at least one type selected from the group consisting of an epoxy cross-linking agent, a carbodiimide cross-linking agent, and an isocyanate cross-linking agent.

7. The laminate according to claim 2,

wherein a raw material of the polyurethane resin contains a silane coupling agent, and
wherein a content ratio of the silane coupling agent is 0.01 % by mass or more and 20% by mass or less with respect to a total amount of the raw material of the polyurethane resin.

8. The laminate according to claim 5,

wherein the chain extender contains a silane coupling agent containing an amino group, and/or
wherein the polyurethane dispersion contains a cross-linking agent, the cross-linking agent contains an epoxy cross-linking agent, and the epoxy cross-linking agent contains a silane coupling agent containing an epoxy group.

FIG. 1

1

FIG. 2

10

## INTERNATIONAL SEARCH REPORT

<table>
<tr><td colspan="2">International application No.</td></tr>
<tr><td colspan="2">**PCT/JP2024/001891**</td></tr>
</table>

| A. | CLASSIFICATION OF SUBJECT MATTER |
|---|---|

*B32B 27/30*(2006.01)i; *B32B 27/26*(2006.01)i; *B32B 27/32*(2006.01)i; *B32B 27/36*(2006.01)i; *B32B 27/40*(2006.01)i
FI:    B32B27/30 C; B32B27/40; B32B27/26; B32B27/36; B32B27/32 C

According to International Patent Classification (IPC) or to both national classification and IPC

| B. | FIELDS SEARCHED |
|---|---|

Minimum documentation searched (classification system followed by classification symbols)

B32B27/30; B32B27/26; B32B27/32; B32B27/36; B32B27/40

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | JP 2020-105243 A (MITSUI CHEMICALS, INC.) 09 July 2020 (2020-07-09) claims, paragraphs [0074], [0145], [0156]-[0158], examples 1-10, fig. 1 | 1-5, 7 |
| Y | | 6, 8 |
| Y | WO 2022/158445 A1 (MITSUI CHEMICALS, INC.) 28 July 2022 (2022-07-28) claims, paragraphs [0132]-[0137] | 6, 8 |
| A | WO 2022/259968 A1 (MITSUI CHEMICALS, INC.) 15 December 2022 (2022-12-15) claims, examples 1-12 | 1-8 |
| A | WO 2022/220200 A1 (TOPPAN PRINTING CO., LTD.) 20 October 2022 (2022-10-20) claims, examples 1-9 | 1-8 |
| A | US 2021/0098752 A1 (BENQ MATERIALS CORP.) 01 April 2021 (2021-04-01) claims, examples 1-3 | 1-8 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **03 April 2024** | **16 April 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**
Information on patent family members

International application No.

**PCT/JP2024/001891**

| Patent document cited in search report | | | Publication date (day/month/year) | Patent family member(s) | | | Publication date (day/month/year) |
|---|---|---|---|---|---|---|---|
| JP | 2020-105243 | A | 09 July 2020 | (Family: none) | | | |
| WO | 2022/158445 | A1 | 28 July 2022 | EP claims, paragraphs [0132]-[0137] KR 10-2023-0118662 TW | 4282891 202237682 | A1 A A | |
| WO | 2022/259968 | A1 | 15 December 2022 | (Family: none) | | | |
| WO | 2022/220200 | A1 | 20 October 2022 | (Family: none) | | | |
| US | 2021/0098752 | A1 | 01 April 2021 | TW | 202114271 | A | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2022158445 A